# EUROPEAN PATENT APPLICATION

(11) **EP 4 067 631 A1**
(43) Date of publication of application: **05.10.2022**
(21) Application number: 21728140.1
(22) Date of filing: 18.01.2021
(51) Int. Cl.: F01K 27/00, F01K 7/00, F01K 13/00, F03G 6/06, F01K 13/02, F01K 21/00

(54) **PRIME MOVER AND WORK-DOING METHOD AND A WATER TURBINE GROUP**

(30) Priority: 29.11.2019 CN 201911204973; 29.11.2019 CN 201911207014; 29.11.2019 CN 201911204772; 26.11.2020 CN 202011347292; 26.11.2020 CN 202011347271; 26.11.2020 CN 202011352924
(71) Applicant: Zhong, Xuebin, Changsha, Hunan 410000 (CN)
(72) Inventor: Zhong, Xuebin, Changsha, Hunan 410000 (CN)
(74) Representative: Mitola, Marco
(86) International application number: PCT/CN2021/072572
(87) International publication number: WO 2021/104540

(57) **Abstract**

The present application relates to a prime mover, and more particularly to a prime mover, a method of doing work, and a hydraulic turbine unit. The prime mover includes: an evaporator, a main body, and an energy body. The energy body is slidably arranged in the main body. Between a bottom of the energy body and an inner wall of the main body, a closed cavity is formed or a retractable the liner is provided; and the evaporator communicates with the cavity or the liner. The evaporator is configured to continuously absorb heat and evaporate a liquid working medium to push the energy body to move up and do work until reaching an upper limit stroke. The energy body is configured to move downward due to a gravity thereof to compress a gaseous working medium for liquefaction, when an ambient temperature meets a liquefaction temperature. In the present application, the evaporator evaporates the liquid working medium, the volume expansion pushes the energy body upward to do work, and outputs mechanical energy. When the ambient temperature satisfies the set value for liquefaction stroke, the gaseous working medium is compressed due to the gravity of the energy body to perform the liquefaction stroke. The entire working stroke and liquefaction stroke do not need other auxiliary devices, avoid unnecessary energy loss. The prime move has a simple overall structure, low cost, stable performance, high efficiency, and positive economic value.

## Description

### TECHNICAL FIELD

The present application relates to a prime mover, and more particularly to a prime mover, a method of doing work, and a hydraulic turbine unit.

### BACKGROUND

A prime mover refers to all machinery that uses energy to generate a motive power, and is the main source of power required in the field of modern production and life.

In the existing device configured to convert air heat energy into mechanical energy, a working medium having a low evaporation temperature is generally used to absorb heat and expand to do work. However, the convention from the liquid state into a gaseous state requires special mechanical device; and the conversion of the gaseous working medium into the liquid state also requires other devices to compress the gaseous working medium or to increase an exhaust pressure. Such manners will reduce the working pressure difference and reduce the work. For example, the gaseous working medium is compressed into the liquid state by a compression machine. The above two steps increase the manufacturing cost of the device; and meanwhile, a large amount of kinetic energy or electrical energy needs to be consumed, resulting in problems such as high cost and large energy loss.

At present, the heat energy at below 80° is basically difficult to be utilized and belongs to waste heat. In many cases, additional cooling devices are required to cool such heat energy, this results in double energy consumption. Although the low-temperature heat energy recovery has been realized by adopting a screw expander, the screw expander is expensive, low efficiency, and poor performance, thus being not economical. In addition, although having been developed for a long time, such method of adopting the screw expander still remains in the laboratory.

An existing slidable and sealing structure for the energy body in the prime mover and the like are generally sealed by a seal member similar to a piston ring. Nevertheless, an inner circular surface that fits with the seal member still needs to meet extremely high dimensional requirements, and the inner circular surface and the seal member need to have a very small fit tolerance. Therefore, the use of slidable and sealing fitting greatly increases the cost of device, and may have the problem of failure or leakage after a long time use.

Chinese invention patent application with an application number of CN201510375201.4, and titled "method and device for obtaining cold air and electric energy by using low-temperature medium" records a device for obtaining cold air and electric energy by using a low-temperature medium. And in paragraph [0029] of the description recites that "the refrigerant condenses in the first condenser 13 and releases condensation heat to the heat exchange medium, and the condensation heat is absorbed by the heat exchange medium. The refrigerant is condensed into a liquid, the liquid then enters a first expansion mechanism 15 for depressurization and then evaporated in a first evaporator 16; ...... during evaporation, the refrigerant absorbs the heat of the heat exchange medium and expands to perform work on a rotary vane power machine 17, which makes the rotary vane power machine 17 operate to generate mechanical energy. The refrigerant after doing work is in a gaseous working medium state, which is compressed by an electricity generative gaseous working medium compressor 12 and conveyed into the first condenser 13, thus realizing the circulation, and continuously providing an expansion kinetic energy for the rotary vane power machine 17 ". In this invention, the refrigerant needs to be depressurized by the expansion mechanism 15 and then evaporated in the first evaporator 16, during which, the expansion thereof due to the evaporation performs work on the rotary vane power machine 17, after that the refrigerant is compressed by electricity generative gaseous working medium compressor 12 and flows back to the first condenser, thus realizing the circulation. In the cycle path of the refrigerant when doing work, the evaporation and liquefaction of the refrigerant require the expansion mechanism and electricity generative gaseous working medium compressor 12, respectively, which increases the cost and requires a large amount of kinetic energy or electric energy to be consumed, resulting in waste of energy and unable to generate economic benefit. In the meanwhile, with the design of this kind of circulation pipeline, the refrigerant has a long flow path, and part of the energy will be lost along the way, which will also cause energy loss.

### SUMMARY

The technical problem to be solved by the present application is to provide a prime mover and a method of doing work, and a hydraulic turbine unit. The prime mover utilizes the heat generated by solar heat collection, large and medium-sized central air conditioners, industrial waste flue gas water, large engines, and the like, and outputs mechanical energy. The entire working stroke and liquefaction stroke do not need other auxiliary devices, avoid unnecessary energy loss. The prime move has excellent integral sealing effect, simple overall structure, low cost, stable performance, high efficiency, and positive economic value.

The present application provides a prime mover. The prime mover comprises: an evaporator, a main body, and an energy body. The energy body is slidably arranged in the main body. Between a bottom of the energy body and an inner wall of the main body, a closed cavity is formed or a retractable the liner is provided; and the evaporator communicates with the cavity or the liner. The evaporator is configured to continuously absorb heat and evaporate a liquid working medium to push the energy body to move up and do work until reaching an upper limit stroke. The energy body is configured to move downward due to a gravity thereof to compress a gaseous working medium for liquefaction, when an ambient temperature meets a liquefaction temperature.

Furthermore, the prime mover further comprises a radiator. The radiator is configured to discharge a heat quantity generated by a liquefaction stroke.

Furthermore, the prime mover further comprises: a controller, as well as an upper limit switch and a lower limit switch that are arranged at the energy body. The controller is in electrical connection with the upper limit switch, the lower limit switch, the evaporator, and the radiator.

Furthermore, the prime move further comprises a lock device, configured to lock the energy body. The controller is in electrical connection with the lock device.

Furthermore, a temperature sensor is arranged within the evaporator; the temperature sensor is configured to detect whether a temperature in the evaporator reaches a preset temperature for work. The controller is in electrical connection with the temperature sensor.

Furthermore, the prime mover further comprises: an ambient temperature sensor and/or a pressure sensor. The pressure sensor is configured to monitor a pressure value within the cavity. The ambient temperature sensor and/or the pressure sensor is in electrical connection with the controller.

Furthermore, the evaporator communicates with the liquid reservoir via a pipeline I. A solenoid valve I is provided at the pipeline I; and the controller is in electrical connection with the solenoid valve I.

Furthermore, an upper liquid level sensor and a lower liquid level sensor are arranged within the liquid reservoir. The controller is in electrical connection with the upper liquid level sensor and the lower liquid level sensor.

Furthermore, the main body or the energy body is provided thereon with the rolling bodies. An outer wall of the energy body and an inner wall of the main body are connected via the rolling bodies.

Furthermore, the prime mover further comprises at least one set of ball screw. Atop of the main body is provided with an end cap. A nut assembly of the at least one set of the ball screw is rotatably arranged at the end cap. A screw of the at least one set of the ball screw has one end fixed at the energy body and the other end passing through the end cap.

Furthermore, the end cap is further provided thereon with a generator. The generator is provided with a transmission wheel matching with the nut assembly. The transmission wheel, under the driving of the nut assembly, drives the generator to generator electricity.

Furthermore, three sets of ball screws are arranged in a circle; and the transmission wheel of the generator simultaneously meshes with three sets of nut assemblies.

Furthermore, the prime mover further comprises one or a plurality of guiding support columns arranged in parallel with the screw. The plurality of guiding support columns are arranged in a circle; and each of the plurality of guiding support columns has one end in fixed connected with the energy body and the other end passing through the end cap.

Furthermore, the other ends of the plurality of guiding support columns passing through the end cap are in fixed connection with a fixed plate.

Furthermore, a closed end cap is arranged at one side of the main body far away from the evaporator. An accommodation space containing an energy liquid is formed by an inner wall of the main body, the end cap, and the energy body. The end cap is provided with a pipeline III. The pipeline III has one end communicating with the accommodation space and the other end connected with a hydraulic turbine. A water tank is arranged at a water outlet of the hydraulic turbine. The water tank is connected to the pipeline III or the accommodation space via a pipeline IV. The pipeline IV is provided thereon with a valve. The water tank is arranged higher than the accommodation space.

Furthermore, the prime mover further comprises a hydraulic turbine unit arranged at one side of the energy body facing away from the cavity. The hydraulic turbine unit comprises: a water bladder container having an opening facing the energy body, and a water bladder arranged inside the water bladder container. The water bladder is connected with an end of pipeline III. The other end the pipeline III is connected with a hydraulic turbine. A water tank is arranged at a water outlet of the hydraulic turbine. The water tank is connected to the pipeline III or the water bladder via a pipeline IV The pipeline IV is provided thereon with a valve. The water tank is arranged higher than the accommodation space.

Furthermore, the water bladder container is in fixed connection with the main body.

The present application further provides a hydraulic turbine unit. The hydraulic turbine unit comprises: an evaporator, a main body, and a retractable liner. The liner is arranged within the main body and communicates with the evaporator; the main body contains an energy liquid therein. The main body is connected with one end of a pipeline III, and the other end of the pipeline III is connected with a hydraulic turbine. A water tank is arranged at a water outlet of the hydraulic turbine. The water tank is connected with the pipeline III via a pipeline IV The pipeline IV is provided thereon a valve; and the water tank is arranged higher than the main body. The evaporator is configured to continuously absorb heat and evaporate a liquid working medium to enter the liner, such that a volume expansion of the liner pressurizes the energy liquid filled in the main body, and a pressurized energy liquid flows into the hydraulic turbine to output a mechanical energy. The energy liquid is configured to flow back to the main body due to a gravity thereof via the pipeline IV or via the pipeline IV and the pipeline III and to compress a gaseous working medium for liquefaction, when an ambient temperature meets a liquefaction temperature.

The present application further provides a hydraulic turbine unit, comprising: a hydraulic turbine, two heat exchangers, and two main bodies. Each heat exchanger communicates with a corresponding main body. One of the two main bodies is accommodated with an energy liquid. Each of two main bodies is connected with a water inlet and a water outlet of the hydraulic turbine via two pipelines and the four pipelines are all provided valves thereon respectively. Each of the two heat exchangers is connected with a cool source and a heat source, and the cool source and the heat source are operably to control an on-off state thereof.

In a state that one of the two heat exchangers communicates with a heat source and the other one of the two heat exchangers communicates with a cool source, a liquid working medium contained in the heat exchanger communicating with the heat source continuously absorbs heat and evaporates to enter the corresponding main body where the gaseous working medium pressurizes the energy liquid filled in the main body, the pressurized energy liquid flows to the hydraulic turbine through a pipeline and a control valve, and a resulting energy liquid flows out of the water outlet of the hydraulic turbine through a pipeline and a control valve and enters the other main body in connection with the cool source where the gaseous working medium is pressurized, and the other two pipelines are closed.

By controlling the on-off state of the heat source and the cool source, the energy liquid flows back and forth in the two main bodies, so that the hydraulic turbine is operated to output mechanical energy.

Furthermore, every two pipelines corresponding to a same main body converge with each other at a side close to the same main body, and are independently connected with the main body after the converging.

Furthermore, every two pipelines connected with the water inlet of the hydraulic turbine converge with each other at a side close to the water inlet, and are independently connected with the water inlet of the hydraulic turbine after the converging. Every two pipelines connected with the water outlet of the hydraulic turbine converge with each other at a side close to the water outlet, and are independently connected with the water outlet of the hydraulic turbine after the converging.

Furthermore, the hydraulic turbine unit further comprises two sets of heat exchangers, main bodies, and retractable liners, and four pipelines. The gaseous working medium in the main body is pre-cooled before compression, and the liquid working medium is pre-heated before evaporation. The two sets alternately supply the pressurized energy liquid to the hydraulic turbine, so that the hydraulic turbine operates continuously.

Furthermore, the hydraulic turbine unit further comprises a retractable liner arranged inside each main body. The liner communicates with a corresponding heat exchanger.

Furthermore, a water bladder is arranged in each main body, the energy liquid is arranged in the water bladder, and the water bladder communicates with a pipeline.

Furthermore, the hydraulic turbine unit further comprises an energy body slidably arranged inside the main body. The energy liquid is contained at one side of the energy body facing away from the heat exchanger.

The present application further provides a method of doing work, being applied to the above-described prime mover. The method comprises the following steps:

enabling the liquid working medium in the evaporator to absorbs heat and evaporates to form the gaseous working medium to enter the liner, such that the liner expands along the cavity and pushes the energy body to move upward and do work until reaching the upper limit stroke; and enabling the energy body to move down and compresses the liner due to a gravity thereof, when the ambient temperature meets the liquefaction temperature, so as to liquefy the gaseous working medium in the liner.

The method of doing work specifically comprises the following steps:
step 1: in a state that the energy body is at a bottom, and the temperature sensor detects that the temperature in the evaporator reaches a temperature for work, controlling, by the controller, the solenoid valve I to open, enabling the liquid working medium in the liquid reservoir to flow into the evaporator, and to form the gaseous working medium after evaporation, introducing the gaseous working medium to the liner, so as to expand the liner along the cavity and to push the energy body to move up and do work externally;
step 2: triggering an upper limit switch once the energy body moves to the upper limit stroke; receiving a signal from the upper limit switch by the controller, controlling the solenoid valve I to close, and controlling the lock device to lock a position of the energy body;
step 3: controlling, by the controller, the radiator to work, when it is detected by the ambient temperature sensor that an ambient temperature reaches a set value for liquefaction stroke, and enabling a pressure of the gaseous working medium in the liner to drop; and controlling, by the controller, the lock device to release from locking, when it is detected by the pressure sensor that the pressure meets a set value, and at the same time controlling the solenoid valve I to open, to enable the energy body to move downward, such that the liner is contracted along the cavity by a downward pressure of the energy body, and the liquefied gaseous working medium flows back into the liquid reservoir;
step 4: triggering a lower limit switch once the energy body moves down to the lower limit stroke, receiving, by the controller, a signal from the lower limit switch, controlling the solenoid valve I to turn off, and enabling the radiator to stop working; and
step 5: repeating step 1 to reciprocate a working stroke and the liquefaction stroke.

Furthermore, an end cap, a ball screw, and a generator are further included. During the work movement of the energy body, the energy body pushes a screw of the ball screw to move up, the screw drives a nut assembly of the ball screw to rotate, and the nut assembly drives a transmission wheel of the generator to rotate to generate electricity.

Furthermore, an end cap, a hydraulic turbine, and a water tank are further included. Between an inner wall of the main body, the end cap, and the energy body, an accommodation space containing the energy liquid is formed. During the work movement of the energy body, the energy body pushes the energy liquid along the pipeline III to enter the hydraulic turbine to generate electricity, and the energy liquid flows from the water outlet of the hydraulic turbine into the water tank. During the liquefaction stroke, the energy liquid flows back to the accommodation space through the valve and the pipeline IV, and pushes the energy body to move, whereby compressing the gaseous working medium for the liquefaction.

Furthermore, a water bladder container, a water bladder, a hydraulic turbine, and a water tank are further included. During the work movement of the energy body, the energy body pushes the energy liquid in the water bladder through the pipeline IV to enter the hydraulic turbine to generate electricity, and the energy liquid flows from the water outlet of the hydraulic turbine into the water tank. During the liquefaction stroke, the energy liquid flows back to the water bladder through the valve and the pipeline IV, and compresses the gaseous working medium for the liquefaction.

The beneficial effect of the present application is summarized as follows: in the present application, the liquid working medium is evaporated by the evaporator, and the volume expansion pushes the energy body to move upward to do work, and output mechanical energy. When the ambient temperature meets the set value for liquefaction stroke, the energy body compresses the gaseous working medium to carry out the liquefaction stroke, the whole working stroke and the liquefaction stroke do not need other auxiliary device, and unnecessary energy loss is avoided. The prime mover has simple overall structure, low cost, stable performance, high efficiency, and positive economic value. The liquid working medium evaporates into the gaseous working medium, the gaseous working medium enters the retractable liner, and the liner in turn expands along the cavity to push the energy body upwards, which greatly improves the sealing property without the need of slidable and sealing engagement between the energy body and the main body, thus reducing the manufacturing difficulty and cost.

The present application is also provided with the rolling bodies. The energy body is rolled connection with the main body through the rolling bodies, which greatly reduces the frictional resistance between the energy body and the inner wall of the main body, reduces wear, and avoids unnecessary energy loss.

By the configuration of the radiator, the heat generated by compressing the gaseous working medium during the liquefaction stroke is discharged, which further reduces the pressure in the liner, and the gravitational potential energy of the energy body is greater than the energy required for the liquefaction of the gaseous working medium in the liner, and the energy body can also do work externally during the process of the liquefaction stroke.

The configuration of the liquid reservoir in the present application increases the total output of the evaporator and the working stroke of the energy body, so as to improve work efficiency. And the configuration of the lock device is able to prevent the energy body from changing its position and state due to external temperature changes.

In the present application, the ball screw is adopted to realize the energy output. The ball screw has high efficiency, large speed ratio, and is able to directly convert the linear motion into the rotational motion, which can be well applied to the characteristics of the prime mover with short working distance, large output force, and one-way linear motion, thus solving the problem existing in use of the rack and pinion transmission to generate electricity, such as low efficiency and limited transmission power, and the need for an oversized speed increaser, which may lead to the difficulty of device manufacturing and high cost.

The present application further provides a solution for generating electricity through the water tank and the hydraulic turbine. By adopting the energy liquid and the hydraulic turbine for electricity generation, a speed change system is not required and mechanical loss is avoided, and meanwhile, after the working stroke of the prime mover, the energy liquid is stored in the water tank, the energy is therefore stored and thereafter provided for the liquefaction stroke.

The present application further provides a solution for generating electricity through the water tank and the hydraulic turbine. By adopting the energy liquid and the hydraulic turbine for electricity generation, a speed change system is not required and mechanical loss is avoided, and meanwhile, after the working stroke of the prime mover, the energy liquid is stored in the water tank, the energy is therefore stored and thereafter provided for the liquefaction stroke. In addition, the present application can also replace the energy body by the energy liquid, and use the energy liquid as the energy body, in this way, the slidable fitting with the energy body is not required, thus avoiding unnecessary energy loss and improving energy efficiency.

Moreover, the present application further provides a hydraulic turbine unit, which can work continuously through the energy liquid in the main body. When the conditions of the heat source and the cool source are satisfied, the hydraulic turbine can operate reciprocatedly and output the electricity. Thus, low-grade thermal energy can be effectively utilized to produce waste heat in life, and the water in the river, lake, sea, or air at low temperature in the natural environment can be used as the cool source. By directly transfer the high pressure generated by expansion of a working medium in a fixed volume of the main body to the energy liquid in the main body, the energy liquid obtains the high pressure and drives the hydraulic turbine to operate to generate electricity, and a continuous cycle operation can be realized through multiple sets (more than two sets) of units to ensure the output of the electricity. In addition, compared with the previous single set of the prime mover outputting through the rack and pinion, the ball screw or the water tank, and the like, the mechanical parts of the set of unit in this embodiment is reduced, which saves costs, reduces mechanical wear and energy consumption, and utilizes the heat source and the cool source natural existing in the nature environment and realize continuous cycle operation through the combination of multiple sets; thus converting the unused heat energy that exists widely around into mechanical energy or electrical energy.

### BRIEF DESCRIPTION OF THE DRAWINGS

FIG. 1 is a schematic structural diagram of the present application;
FIG. 2 is a schematic structural diagram of the present application when a sealed cavity is adopted;
FIG. 3 is a cross-sectional view taken from line A-A in FIG. 2;
FIG. 4 is a schematic structural diagram of line A-A in FIG. 1 when a retractable liner is adopted in the present application; and
FIG. 5 is a partial enlarged view of the retractable liner in FIG. 4;
FIG. 6 is a schematic structural diagram of the liner in the present application;
FIG. 7 is the schematic structural diagram taken from line A-A in FIG. 1 when rolling bodies are adopted by the present application;
FIG. 8 is a partial enlarged view of FIG. 7 showing the rolling bodies;
FIG. 9 is a 3/4 sectional view of the main body and the energy body when the rolling bodies are adopted in the present application;
FIG. 10 is a schematic structural diagram of the roller in the present application.
FIG. 11 is a schematic structural diagram of the present application from a first view angle using a hydraulic turbine unit to generate electricity;
FIG. 12 is a schematic structural diagram of the present application from a second view angle using the hydraulic turbine unit to generate electricity;
FIG. 13 is a top view of the present application using the hydraulic turbine unit to generate electricity;
FIG. 14 is a cross-sectional view taken from line B-B in FIG. 13;
FIG. 15 is a partial enlarged view of part A in FIG. 14;
FIG. 16 is a sectional view taken from line C-C in FIG. 13, in which, the energy body is hidden;
FIG. 17 is a front cross-sectional view of one embodiment of the present application adopting the energy liquid and the hydraulic turbine;
FIG. 18 is a front cross-sectional view of another embodiment of the present application adopting the energy liquid and the hydraulic turbine;
FIG. 19 is a schematic structural diagram of the present application using a ball screw to generate electricity;
FIG. 20 is a schematic exploded view of FIG. 19;
FIG. 21 is a schematic structural diagram of another embodiment of the present application using a ball screw to generate electricity;
FIG. 22 is a schematic exploded view of FIG. 21;
FIG. 23 is a schematic structural diagram of the hydraulic turbine unit of the present application;
FIG. 24 is a schematic structural diagram of the hydraulic turbine unit of the present application including two sets in continuous operation; and
FIG. 25 is a partial enlarged view showing pipelines, valves, and hydraulic turbine of FIG. 24.

In the drawings, the following reference numerals are adopted:

1 Liquid reservoir; 2 Evaporator; 3 Main body; 301 Separator; 4 Energy body; 401 Limit rod; 402 Limit teeth; 5 Radiator; 501 Heat exchange tube; 6 Cavity; 7 Solenoid valve I; 8 Temperature sensor; 9 Pressure sensor; 10 Upper liquid level sensor; 11 Lower liquid level sensor; 12 Upper limit switch; 13 Lower limit switch; 14 Lock device; 15 Pipeline I; 16 Pipeline II; 17 Controller; 18 Ambient temperature sensor; 19 Liner; 1901 Liner top cover; 20 Roller; 21 Bearing; 22 Water bladder container; 23 Water bladder; 24 Pipeline III; 25 Hydraulic turbine; 26 Water tank; 27 Pipeline IV; 28 Solenoid valve IV; 33 End cap; 34 Nut assembly; 35 Screw; 36 Fixed plate; 37 Guiding support column; 38 Generator; 39 Transmission wheel; 40 Pipeline a; 41 Pipeline b; 42 Pipeline c; 43 Pipeline d; 44 Valve a; 45 Valve b; 46 Valve c; 47 Valve d; 48 Cool source; 49 Heat source; 50 Valve e; 51 Valve f; and 52 Heat exchanger.

### DETAILED DESCRIPTION OF THE EMBODIMENTS

The following detailed description will explain the general principles of the present application, examples of which are additionally illustrated in the accompanying drawings. In the drawings, similar reference numerals indicate identical or functionally similar elements. As used herein, the term "energy liquid" may include any liquid.

The technical problem to be solved by the present application is to provide a prime mover and a method of doing work. The prime mover utilizes the heat generated by solar heat collection, large and medium-sized central air conditioners, industrial waste flue gas water, large engines, and the like, and outputs mechanical energy. The entire working stroke and liquefaction stroke do not need other auxiliary devices, avoid unnecessary energy loss. The prime move has a simple overall structure, low cost, stable performance, high efficiency, and positive economic value.

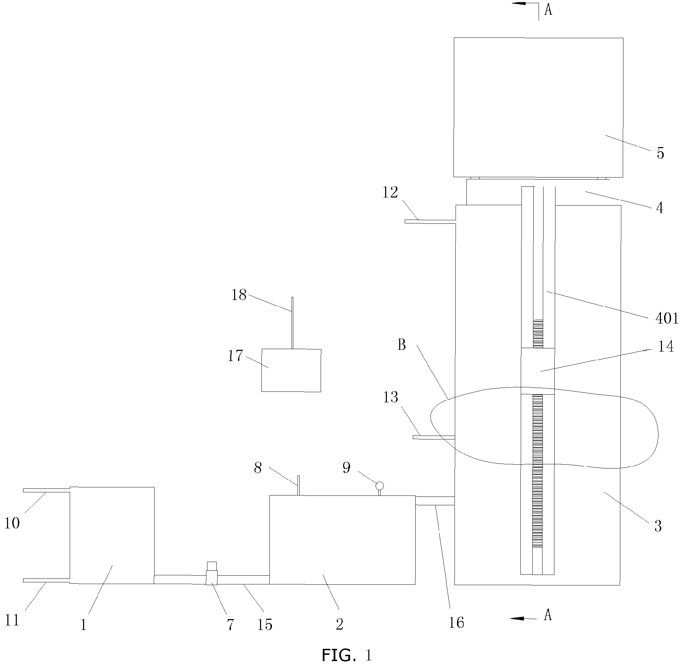

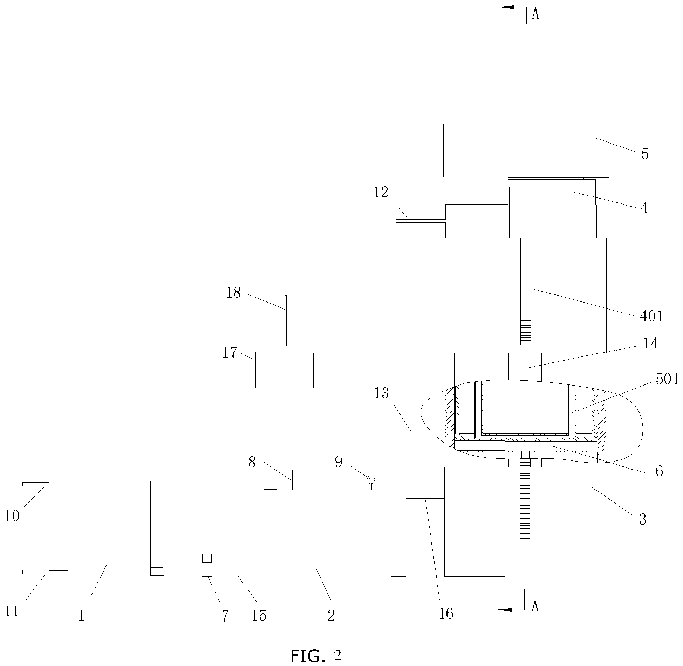

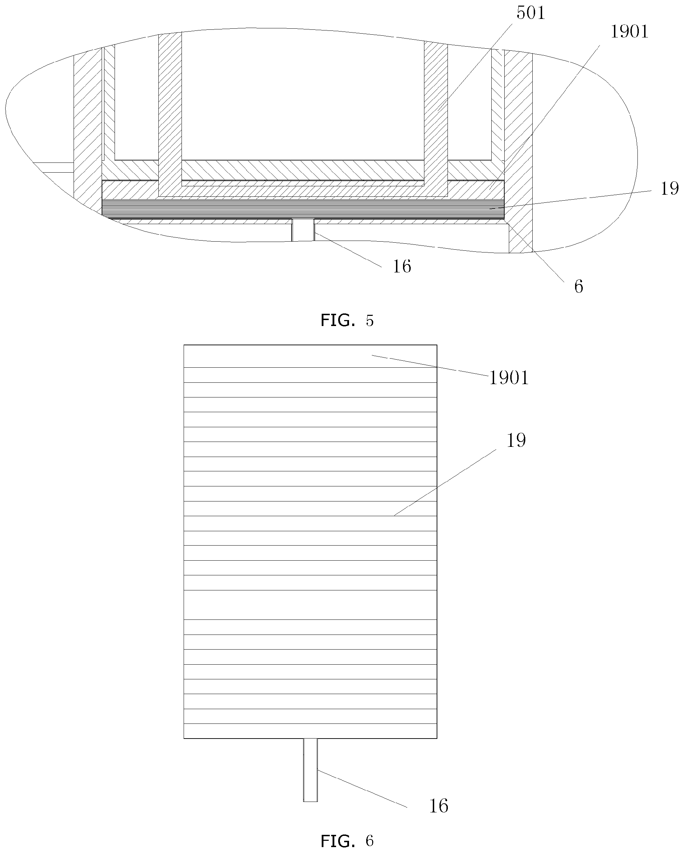

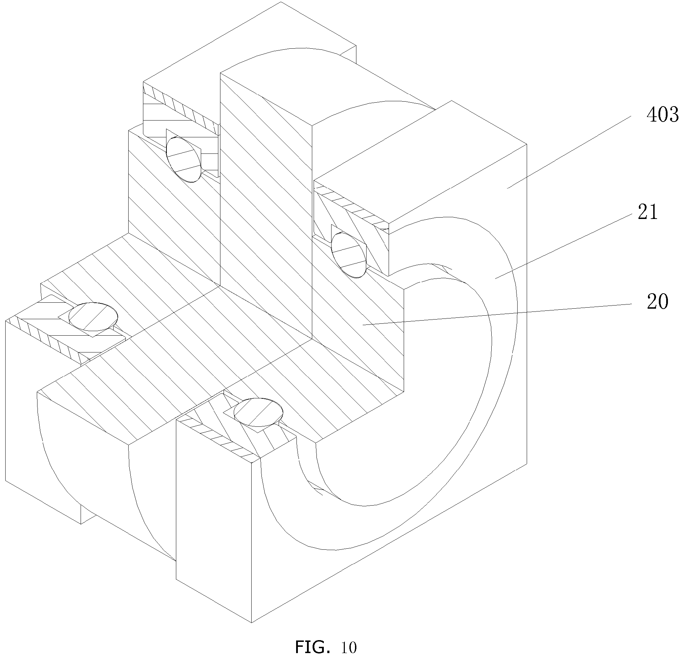

As shown in FIGS. 1-10, the prime mover provided by the present application comprises: prime mover, an evaporator 2, a main body 3, and an energy body 4. The energy body 4 is slidably arranged in the main body 3. Between a bottom of the energy body 4 and an inner wall of the main body 3, a closed cavity 6 is formed or a retractable the liner 19 is provided. The evaporator 2 communicates with a bottom of the cavity 6 or the liner 19 to form a sealed chamber. The evaporator 2 is configured to continuously absorb heat and evaporate a liquid working medium to push the energy body 4 to move up and do work until reaching an upper limit stroke. When an ambient temperature meets a liquefaction temperature, the energy body is configured to move downward due to a gravity thereof to compress a gaseous working medium for liquefaction.

As shown in FIGS. 1-3, a closed cavity 6 is formed between the bottom of the energy body 4 and the inner wall of the main body 3, and the evaporator 2 communicates with the cavity 6. In this embodiment, the energy body 4 is in slidable and sealing fitting with the main body 3.

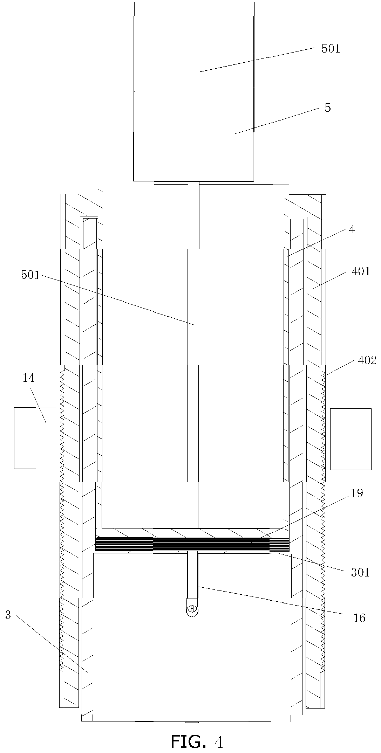

As shown in FIGS. 4-6, the cavity 6 is formed between the bottom of the energy body 4 and the inner wall of the main body 3. The retractable liner 19 is arranged in the cavity 6, and the evaporator communicates with the bottom of the liner 19 to form a sealed chamber. The liner 19 is a retractable structure, such as an air bag. The evaporated liquid working medium is conveyed into the liner 19, which makes a volume of the liner 19 expand along the cavity 6 to carry out a working stroke. During the liquefaction process, the energy body 4 retracts the liner 19 due to the cavity of the energy body 4, and at the same time, the gaseous working medium is liquefied by the pressure of the energy body 4, thereby flowing back into the evaporator 2 and the liquid reservoir 1. The arrangement of the liner 19 greatly improves the sealing performance, thus not requiring the slidable and sealing engagement between the energy body 4 and the main body 3.

Specifically, the evaporator 2 is connected with the bottom of the cavity 6 or the liner 19 through the pipeline II 16. The pipeline II 16 is arranged in an L shape, one end of the pipeline II 16 is connected to the bottom of the cavity 6 or the liner 19, and the other end of the pipeline II 16 is connected to a top of the evaporator 2, which is beneficial for the liquid working medium formed after the liquefaction of the gaseous working medium to flow back into the evaporator 2 under the action of the gravity thereof. The energy body 4 is arranged vertically to improve the stability of the working stroke and the liquefaction stroke. In this embodiment, in order to facilitate the arrangement of the pipeline II 16, a separator 301 is arranged at a lower part within the main body 3. Thus, the separator 301 serving as the bottom of the main body 3, together with the inner wall of the main body and the bottom of the energy body 4 are enclosed to form the cavity 6. A side of the separator 301 away from the cavity 6 provides an installation space for the pipeline II 16, which simplifies the installation difficulty.

The prime mover of the present application further comprises a radiator 5. The radiator 5 is configured to discharge a heat quantity generated by a liquefaction stroke.

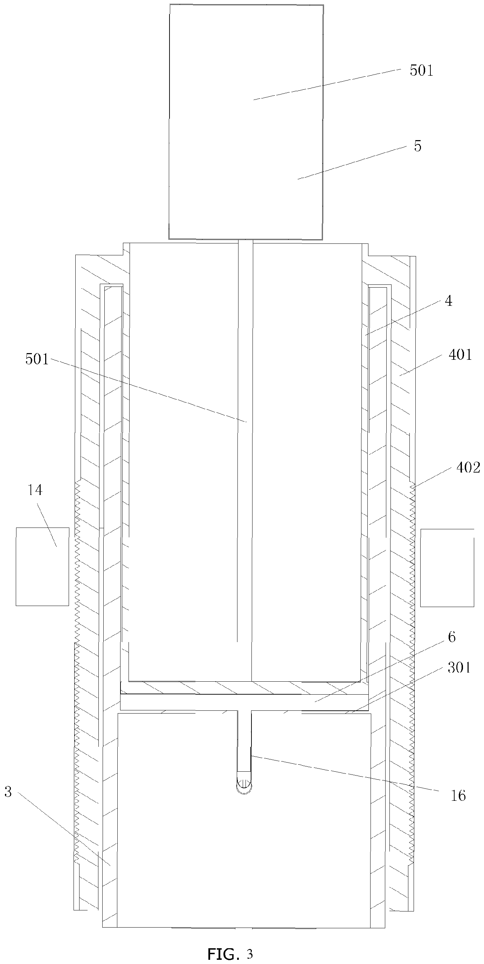

As shown in FIGS. 3-4, 6, and 7, the radiator 5 is arranged on the energy body 4 to move up and down together with the energy body 4. A heat exchange tube 501 of the radiator 5 passes through the main body 3 and is placed within the cavity 6 or the liner 19. When arranging the liner 19, a material of a liner top cover 1901 of the liner 19 is selected from a material having a high thermal conductivity. One end of the heat exchange tube 501 communicates with the radiator 5, and the other end is placed in a liner top cover 1901, such that the heat generated in the linear 19 during the compression of the gaseous working medium is discharged from the radiator 5 to the outside.

Specifically, when the ambient temperature satisfies the liquefaction stroke, the radiator 5 can be turned on, and the heat generated during the compression of the gaseous working medium can be discharged to the outside through the radiator 5, thereby reducing energy required for liquefaction of the gaseous working medium in the cavity 6 or the liner 19. When the gravitational potential energy of the energy body 4 is greater than the energy required for the liquefaction of the gaseous working medium in the cavity 6 or the liner 19, the energy body 4 does work externally during the liquefaction stroke. In addition, when the ambient temperature is relatively low, the gravitational potential energy of the energy body 4 is greater than the energy required for the liquefaction of the gaseous working medium in the cavity 6 or the liner 19, and the energy body 4 also does work externally during the liquefaction stroke.

The prime mover of the present application further comprises a controller 17, and further comprises an upper limit switch 12 and a lower limit switch 13 that are arranged at the energy body 4. The controller 17 is in electrical connection with the upper limit switch 12, the lower limit switch 13, the evaporator 2, and the radiator 5.

The controller 17 is used to control the start and the stop of the working stroke and the liquefaction stroke. The upper limit switch 12 and the lower limit switch 13 correspond to the upper limit stroke and the lower limit stroke of the energy body 4. After the energy body 4 moves up to the upper limit stroke, the upper limit switch 12 is triggered. When the ambient temperature satisfies a set value for liquefaction stroke, the liquefaction stroke starts, the controller 17 controls the radiator 5 to start work and to discharge the heat generated by the liquefaction stroke, such that the energy required for liquefaction of the gaseous working medium in the cavity 6 or the linear 19 is reduced, and the energy body 4 does work externally during the liquefaction stroke. After the energy body 4 moves down to the lower limit stroke, the lower limit switch 13 is triggered, the controller 17 stops the liquefaction stroke, and starts the working stroke.

The prime mover of the present application further comprises: a lock device 14, configured to lock the energy body 4. The controller 17 is in electrical connection with the lock device 14. The lock device 14 is configured to lock the energy body 4 after the ending of the working stroke or the liquefaction stroke, to avoid the energy body 4 from changing the position thereof due to the changes in the outside ambient temperature. Moreover, in case that the temperature of the evaporator 2 in the working stroke is lower than the set value for working stroke, or in case that the outside ambient temperature in the liquefaction stroke is higher than the set value for liquefaction stroke, the lock device 14 is further configured to stop the working stroke or the liquefaction stroke, in such condition, the controller 17 controls the lock device 14 to lock the energy body 4. Specifically, when the energy body 4 moves upward to the upper limit stroke, the upper limit switch 12 is triggered and sends a feedback signal to the controller 17, which controls the lock device 14 to lock the energy body 4. During the working stroke, if it is detected by the temperature sensor 8 detects that the temperature of the evaporator 2 is lower than the set value, the working stroke ends in advance, and the energy body 4 is locked by the lock device 14, thereby being prevented from changing the position of the energy body 4 caused by the change of the outside ambient temperature. When the energy body 4 moves downward to the lower limit stroke, the lower limit switch 13 is triggered and sends a feedback signal to the controller 17, which controls the lock device to lock the energy body 4. During the liquefaction stroke, if it is detected by the ambient temperature sensor 18 that the ambient temperature is higher than the set value, the liquefaction stroke ends in advance, and the energy body 4 is locked by the lock device 14, thereby being prevented from changing the position of the energy body 4 caused by the change of the outside ambient temperature.

Specifically, the lock device 14 may be a structure having a controllable retractable block. The bottom of the energy body 4 is in sealing engagement with the main body 3 through a piston ring, and an upper end of the piston ring at a periphery of the energy body 4 is provided with tooth slots, and the tooth slot matches with the lock device 14. In this structure, the lock device 14 is arranged at a top of the main body 3, and the lock device 14 can be controlled to extend out the block to be engaged with the tooth slot on the main body 3 to complete the locking of the energy body 4.

In order to improve the flowability of the energy body 4 sliding in the main body 3, an end of the energy body 4 is fixed with a limit rod 401 or limit cylinder located within the main body 3. By locking the limit rod 401 or the limit cylinder, the energy body 4 is locked by the lock device 14. The structure of the limit rod 401 can be a square plate or an arc-shaped plate, preferably a square plate. The limit rod 401 defines thereon limit teeth 402, and the lock device 14 is engaged with the limit teeth 402 by extending out the block to complete the locking of the energy body 4. In addition, the length of the limit teeth or tooth slot is no shorter than a stroke length of the energy body 4.

The tooth slot structure or the limit rod 401 or the limit cylinder and the lock device 14 are distributed symmetrically around an axis of the main body 3 in a circle, thus preventing the lock device 14 from pushing the energy body 4 to deviate from the stroke direction. In this embodiment, preferably, two sets of the tooth slot structures or the limit rods 401 or the limit cylinders and the lock devices 14 are symmetrically arranged.

A temperature sensor 8 is arranged within the evaporator 2. The temperature sensor 8 is configured to detect whether a temperature in the evaporator 2 reaches a preset temperature for work. The controller 17 is in electrical connection with the temperature sensor 8. After the controller 17 detects that the temperature in the evaporator 2 reaches the set value for working stroke, the working stroke starts. During the working stroke, when the temperature sensor 8 detects that the temperature in the evaporator 2 is lower than the set value for working stroke, the working stroke ends in advance, and the lock device 14 locks the energy body 4.

The prime mover of the present application further comprises an ambient temperature sensor 18 and/or a pressure sensor 9. The pressure sensor 9 is configured to monitor a pressure value within the cavity 6 or the liner 19. The ambient temperature sensor 18 and/or the pressure sensor 9 is in electrical connection with the controller 17. Since the cavity 6 or the liner 19 directly communicates with the evaporator 2, the pressure sensor 9 can be placed inside the evaporator 2. When the energy body 4 is at a position of the upper limit stroke, the ambient temperature sensor 18 detects the ambient temperature in real time. When the ambient temperature is lower than the evaporation temperature or lower than the set value for liquefaction stroke, the pressure of the gaseous working medium in the cavity 6 or the liner 19 decreases as the temperature decreases, the controller 17 controls the lock device 14 to unlock, such that the energy body 4 moves down due to the gravity thereof, compresses the gaseous working medium in the cavity 6 or the liner 19, the volume of the gaseous working medium therefore decreases. As the energy body 4 continues to move down, the gaseous working medium is at the same time compressed for liquefaction, thereby completing the liquefaction stroke. The pressure sensor 9 detects the pressure in the cavity 6 or the liner 19 in real time. During the liquefaction stroke, when the ambient temperature is higher than the set value for liquefaction stroke, and/or, when the pressure in the cavity 6 or the liner 19 is higher than the gravitational potential energy of the energy body 4, the liquefaction stroke ends in advance, and the energy body 4 is locked by the lock device 14.

The evaporator 2 communicates with the liquid reservoir 1 via a pipeline I 15. A solenoid valve I 7 is provided at the pipeline I 15. The controller 17 is in electrical connection with the solenoid valve I 7. The liquid reservoir 1 is used to provide a sufficient amount of the liquid working medium to the evaporator 2 to ensure that the evaporation of the liquid working medium is sufficient for the energy body 4 to complete the working stroke. The solenoid valve I 7 is used to control the flowing of the liquid working medium in the liquid reservoir 1.

When the temperature in the evaporator 2 is higher than the set value for working stroke, the controller 17 controls the solenoid valve I 7 to open, and the liquid working medium in the liquid reservoir 1 continuously flows into the evaporator 2 for evaporation until the end of the working stroke, then the solenoid Valve I 7 is closed. When the ambient temperature is lower than the set value for liquefaction stroke, the controller 17 controls the solenoid valve I 7 to open, the energy body 4 moves down and compresses the gaseous working medium to liquefy the gaseous working medium, the liquid working medium flows back into the liquid reservoir 1 and the solenoid valve I 7 closes until the next working stroke begins.

During the working stroke, when the temperature in the evaporator 2 is lower than the set value for working stroke, the controller 17 controls the solenoid valve I 7 to close, the evaporator 2 stops evaporating due to losing the liquid working medium, the volume of the gaseous working medium stops expanding, the energy body 4 stops moving upward, the lock device 14 is controlled to lock the energy body 4, and the working stroke ends in advance. During the liquefaction stroke, the ambient temperature sensor 18 and/or the pressure sensor 9 detect that the ambient temperature is higher than the set value for liquefaction stroke, and/or, when the pressure in the cavity 6 or the liner 19 is higher than the gravitational potential energy of the energy body 4, the controller 17 controls the solenoid valve 17 to close, the energy body 4 is locked by the lock device 14, and the liquefaction stroke ends in advance.

An upper liquid level sensor 10 and a lower liquid level sensor 11 are arranged within the liquid reservoir 1; the controller 17 is in electrical connection with the upper liquid level sensor 10 and the lower liquid level sensor 11. When a liquid level of the liquid working medium triggers the upper liquid level sensor 10, the liquid level stroke ends, the radiator 5 stops working, the energy body 4 triggers the lower limit switch 13 at the same time. When the liquid level of the liquid working medium triggers the lower liquid level sensor 11, the working stroke ends, the evaporator 2 stops working, and the energy body 4 triggers the upper limit switch 12 at the same time. The upper liquid level sensor 10 and the lower liquid level sensor 11 are provided to play the control function when the upper limit switch 12 and the lower limit switch 13 fail.

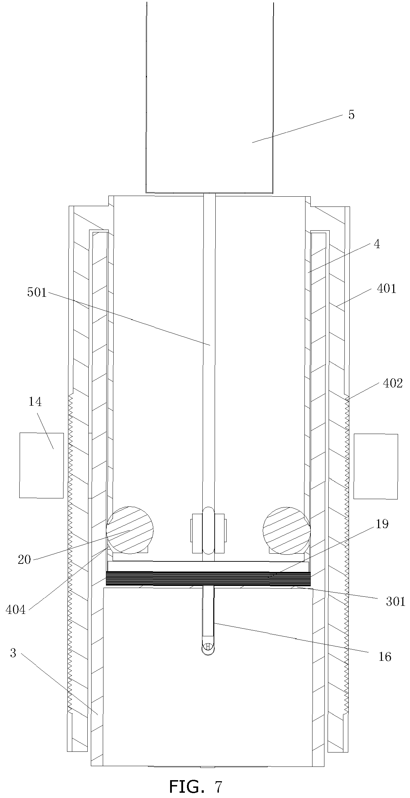

As shown in FIGS. 7-10, the main body 3 or the energy body 4 is provided thereon with the rolling bodies. An outer wall of the energy body 4 and an inner wall of the main body 3 are connected via the rolling bodies.

In this embodiment, the energy body 4 is slidably arranged inside the main body 3 through the rolling bodies, and the original surface contact between the energy body 4 and the main body 3 is changed to a point contact or a line contact, which greatly reduces the frictional resistance between the energy body 4 and the main body 3 and greatly avoids unnecessary energy loss. The cavity 6 is formed between the bottom of the energy body 4 and the inner wall of the main body 3, and the cavity 6 can be arranged as a sealed cavity 6. A seal member is arranged at the bottom of the energy body 4, so that the energy body 4 is slidable and sealing engagement with the inner wall of the main body 3. The rolling bodies are placed above the seal member, thus improving the stability of the movement of the energy body 4. The liquid working medium evaporates and enters the sealed cavity 6 and pushes the energy body 4 to move upward to do work. The cavity 6 can also be provided therein with the liner 19. The liner 19 communicates with the evaporator 2 to form a closed chamber. The liquid working medium evaporates and enters the chamber, such that the liner 19 expands and pushes the energy body 4 to move upward to do work.

The rolling bodies can be balls, cylindrical rollers, tapered rollers, needle rollers and other structures arranged on the main body 3 or the energy body 4. In this embodiment, the rolling bodies are the rollers 20. The energy body 4 is configured as a barrel-shaped structure with an opening. The energy body 4 is provided therein with roller mounting brackets 403 configured for mounting the rollers 20, and the rollers 20 are arranged in the roller mounting brackets 403 through bearings 21. Through holes 404 are defined in the side wall of the energy body 4 at the position where the rollers 20 are installed, and one side of each of the rollers 20 passes through the corresponding through hole 404 and abuts against the inner wall of the main body 3. During the upward or downward movement of the energy body 4, the energy body 4 is slidable on the inner wall of the main body 3 through the rollers 20. By adopting the above structure, the installation structure of the roller 20 does not occupy the inner space of the main body 3, which maximizes the space utilization rate between the energy body 4 and the main body 3, and makes the engagement between the energy body 4 and the main body 3 only has a small gap.

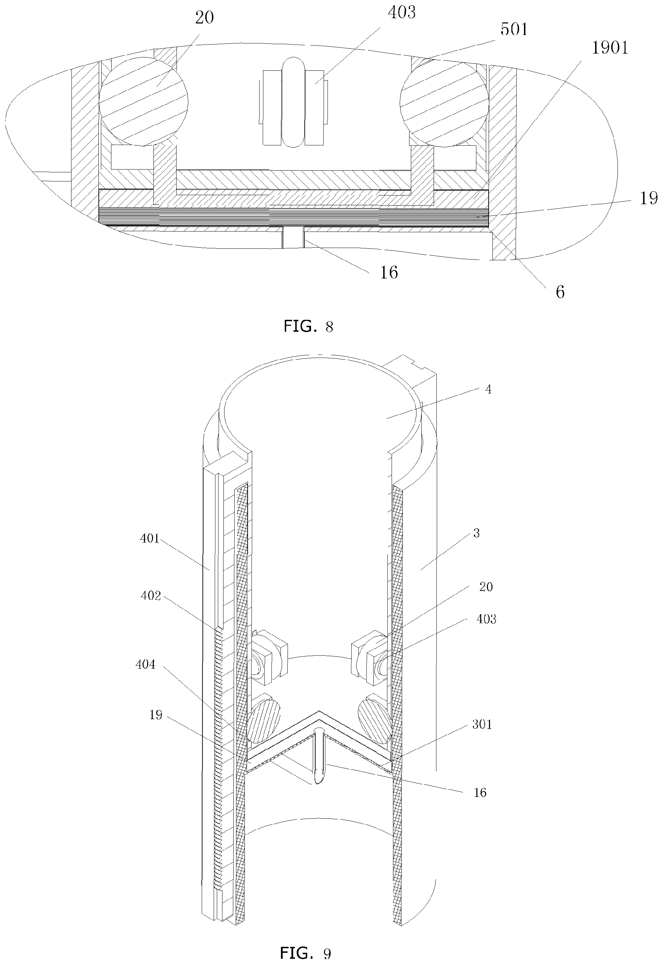

As shown in FIG. 9, in this embodiment, four rollers 20 are arranged in a circle around the axis of the energy body 4 to ensure that four sides of the energy body 4 can be slidable via the rollers, thus improving the stability of the movement of the energy body 4.

The rolling bodies can be arranged in multiple sets along the axis of the energy body 4. When the rolling bodies are arranged on the main body 3, at least one group of rolling bodies are arranged at an upper opening position of the main body 3, so as to ensure that the energy body 4 can also perform effective rolling fit when the energy body 4 is at the upper limit stroke. When the rolling bodies are arranged on the energy body 4, at least one group of the rolling bodies are arranged at a lower end position of the energy body 4, so as to ensure that the energy body 4 can also perform effective sliding fit when the energy body 4 is at the upper limit stroke.

In this embodiment, the energy body 4 is in rolling contact with the main body 3 through the rolling bodies, which greatly reduces the frictional resistance between the energy body 4 and the inner wall of the main body 3 and avoids unnecessary energy loss. By providing the liner 19, in cooperation with the fitting between the energy body 4 and the main body 3 through the rolling bodies, the liquid working medium evaporates and converted into the gaseous working medium, which then enters the retractable liner 19, so as to expand the liner 19 along the cavity 6 to push the energy body 4 to move upward. In this way, the sealing performance is greatly improved, and the manufacturing difficulty and cost are reduced, without the need to slidable and sealing engagement between the energy body 4 and the main body 3.

Taking the constant working temperature of 60° (a pressure of a 410A refrigerant is about 3.83MP) and the constant condensing temperature of 30° (the pressure of the 410A refrigerant pressure is about 1.88MP) as an example, using the 410A refrigerant as the expansion medium, a volume of the cavity is 30m³, a cross-sectional area of the cavity 6 (or the liner) is 5 m², and the volume of the cavity 6 (or the liner) will continuously expand by the rise of the energy body (in the present application, the volume of the refrigerant after expansion matches with that of the cavity 6). At the same time, the evaporator 2 continuously evaporates the refrigerant. When the refrigerant volume evaporates to 30m³, theoretical work done: 500^{∗}500^{∗}3.14^{∗}19.5/1000/367^{∗}6 is about 250 KW.

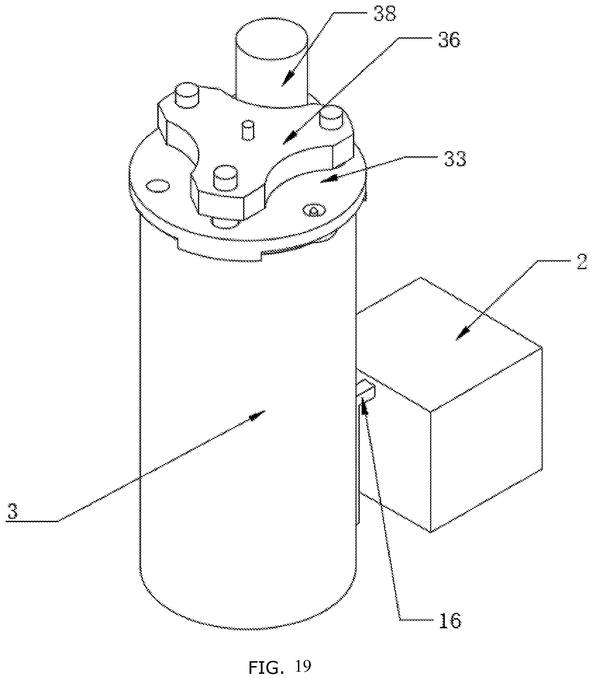

As shown in FIGS. 19-22, the prime mover of the present application further comprises at least one set of ball screw. Atop of the main body 3 is provided with an end cap 33. A nut assembly 34 of the at least one set of the ball screw is rotatably arranged at the end cap 33. A screw 35 of the at least one set of the ball screw has one end fixed at the energy body 4 and the other end passing through the end cap 33.

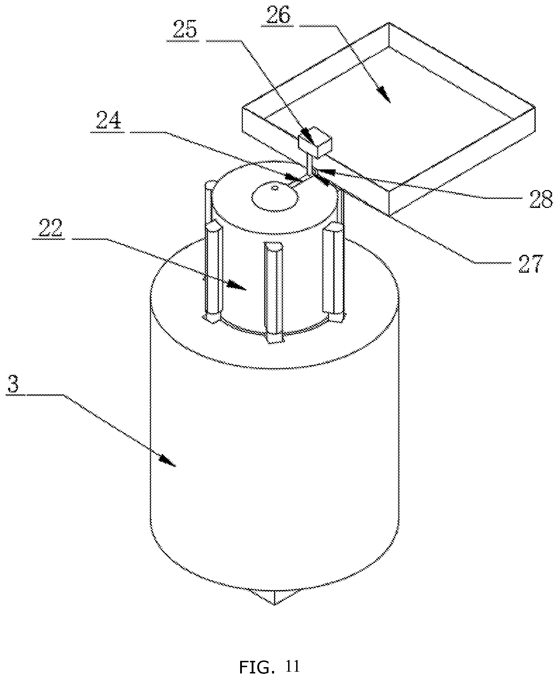

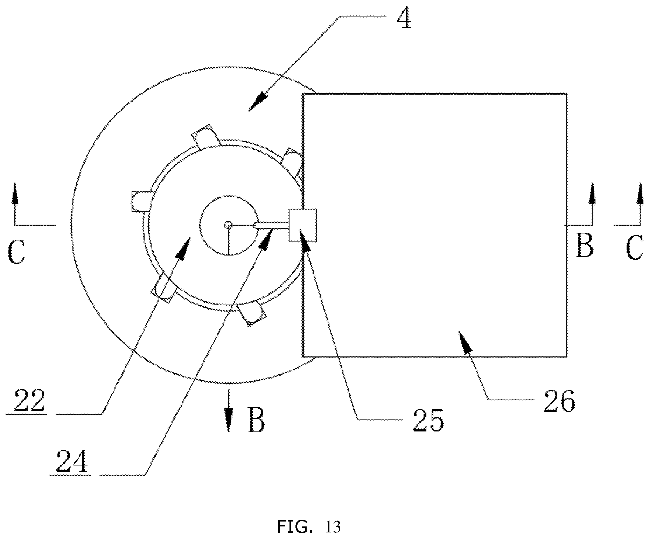

Since the prime mover adopts a linear motion and non-continuous cycle, and the running distance is limited by the manufacturing process of the device. By increasing a diameter of the cavity to obtain super-large thrust, when using rack and pinion transmission, due to the low efficiency of the rack and pinion transmission, the transmission speed ratio is limited by the gear module, so that a speed increaser having an ultra large speed increase ratio is required. However, this will lead to difficulties in the manufacturing process of the device, large mechanical friction loss, and high manufacturing costs. In addition, it is also necessary to ensure reasonable overall volume. In this embodiment, the ball screw is used for energy output and at the same time meets the requirements of large thrust, large speed increase ratio, and small and compact size; the linear motion of the prime mover is converted into (appropriate rotation speed) rotary motion for energy output. As shown in FIG. 11 and FIG. 13, in the working stroke, the energy body 4 moves upward, pushes the screw 35 of the ball screw to move upward, and in turn drives the nut assembly 34 in rotatable connection with the end cap 33 to rotate, and to output the mechanical energy through the rotation of the nut assembly 34. The arrangement of the ball screw can well convert the vertical thrust output by the movement of the energy body into a torque that is convenient to use, without the need for the speed increaser having an ultra large speed increase ratio or the guarantee of the overall size.

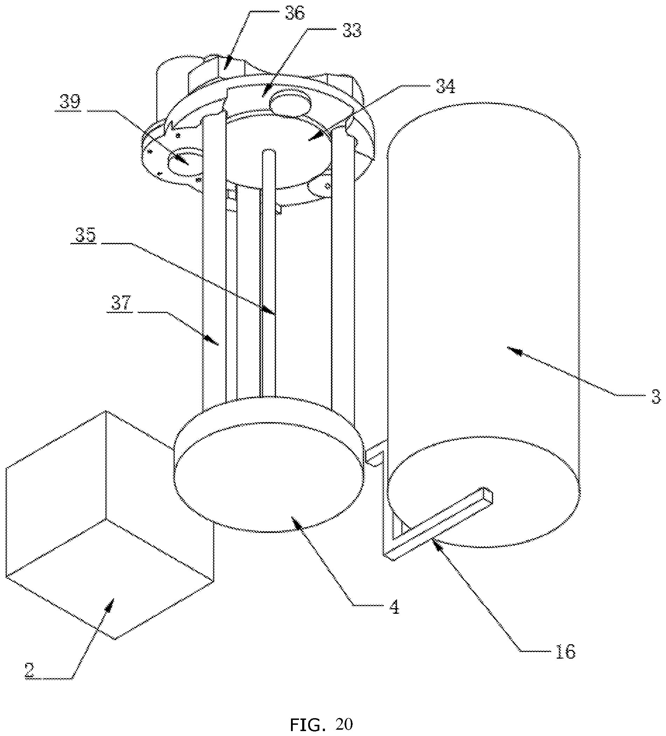

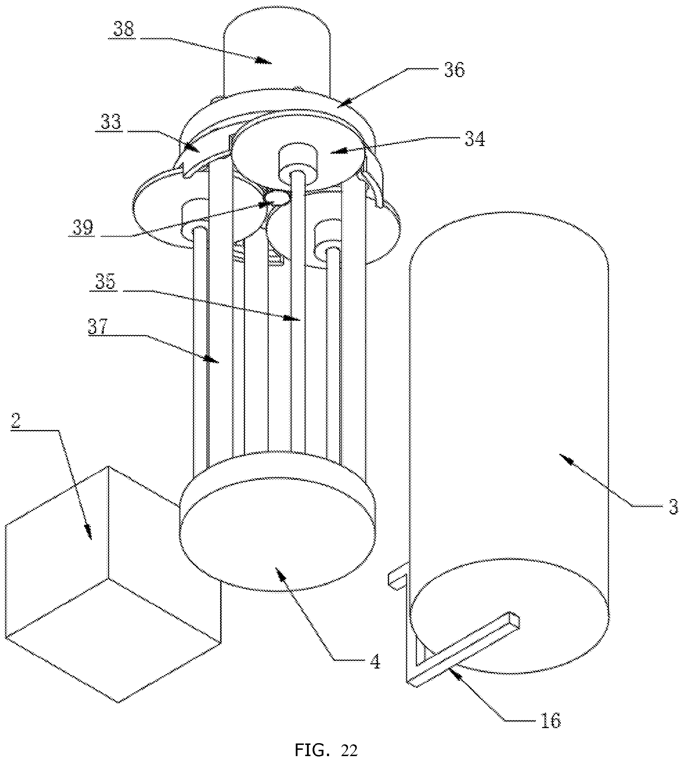

The end cap 33 is further provided thereon with a generator 38. The generator 38 is provided with a transmission wheel 39 matching with the nut assembly 34. The transmission wheel 34, under the driving of the nut assembly 34, drives the generator 38 to generator electricity. The transmission wheel 39 can be engaged with the nut assembly 34 via teeth, or can be driven by a chain or a belt. In this embodiment, the generator 38 is configured to convert the work of the prime mover into electrical energy, which is convenient to use. As shown in FIGS. 20 and 22, an axis of the generator 38 is parallel to an axis of a screw 35 of the ball screw, and the generator 28 is preferably arranged on one side of the end cap 33 facing away from the energy body 4, so as to ensure a compact structure in the main body 3. The transmission wheel 39 is rotatably arranged on one side of the end cap 33 close to the energy body 4, and the transmission wheel 39 is fixedly connected with an output rod of the generator 38. As the energy body 4 moves upward, and the screw 35 of the ball screw is driven to move upward, which in turn drives the nut assembly 34 of the ball screw to rotate, and an external gear on the nut assembly 34 drives the transmission wheel 39 to rotate, thereby enabling the generator 38 to generate electricity. Herein, the external gear is preferably provided at an outer ring of the nut assembly 34, and the transmission wheel 39 is meshed with the external gear. Or alternatively, the transmission can be achieved by adopting a belt or the like. By configuration of the external gear and in combination with the generator 38 to generate electricity, the temperature difference can be used to generate electricity, which is environment friendly, clean, and turns waste into treasure.

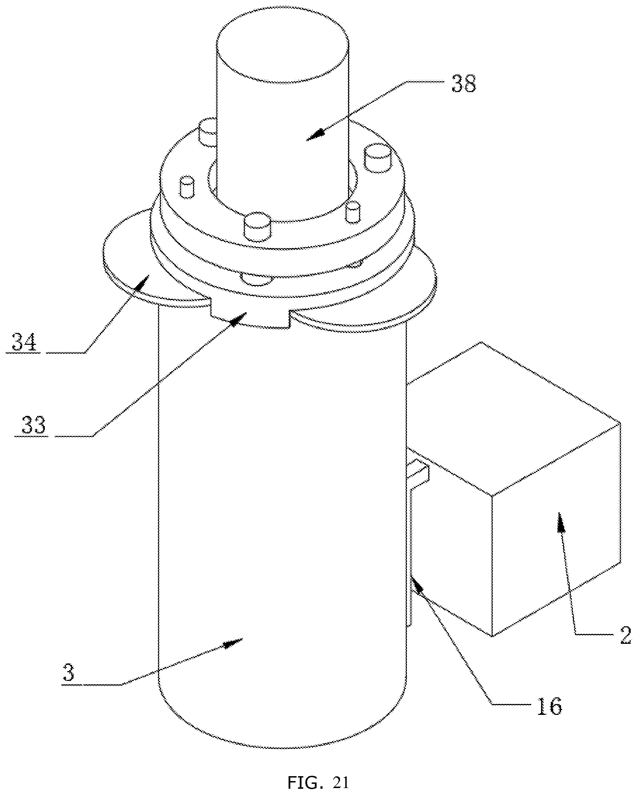

As shown in FIGS. 20 and 21, only one set of the ball screw may be provided, and one or more sets of the generator 38 and the transmission wheel 39 may be provided along the outer side of the nut assembly 34 of the ball screw.

Furthermore, as shown in FIGS. 22-23, three sets of ball screws are arranged in a circle; and the transmission wheel 39 of the generator 38 simultaneously meshes with three sets of nut assemblies 34. In this embodiment, axes of the three sets of ball screws are parallel to the axis of the transmission wheel 39. Meanwhile, axes of the three sets of ball screw are arranged in a circle around the axis of the transmission wheel 39. The nut assemblies 34 of the three sets of ball screws are independent from each other and engage with the transmission wheel 39 at the same time. In this embodiment, the combined use of three sets of ball screws not only fully utilizes the advantages of the ball screws, but also makes up for the problem that the bearing capacity of the ball screws is limited by the diameter of the ball, the number of ball turns, the length of the screw, and material hardness of the screw. The bearing capacity and stability of the screw are greatly improved, and the length of the ball screw is expanded.

The prime mover further comprises one or a plurality of guiding support columns 37 arranged in parallel with the screw 35. The plurality of guiding support columns 37 are arranged in a circle; and each of the plurality of guiding support columns 37 has one end in fixed connected with the energy body 4 and the other end passing through the end cap 33. Specifically, the guiding support column 37 and the end cap 33 have a clearance fit to avoid energy loss. The configuration of the guiding support column 37 ensures the stability of the screw 35 of the ball screw during movement thereof in a straight line, and greatly improves the bearing capacity of the screw of the ball screw, thereby reducing the possibility of damage.

Specifically, the other ends of the plurality of guiding support columns 37 passing through the end cap 33 are in fixed connection with a fixed plate 36. In this embodiment, the screws 35 of the ball screws are also connected to the fixed plate 36. The configuration of the fixed plate 36 enables the energy body 4, the screw 35, and the guiding support column 37 to be integrated as a whole, so that the screw 35 and the guiding support column 37 are jointly stressed during the upward and downward movement of the energy body 4, thus reducing the pressure on the screw 35 and increasing the bearing capacity of the screw 35.

Similarly, taking the constant working temperature of 60°, the constant condensation temperature of 30°, and the movement stroke of the energy body of 6 m as an example, the size of the ball screw is 6m, the lead of the ball screw is 10 mm, the nut assembly 34 makes one turn as the screw 35 rises 10 mm, and the transmission ratio of the external gear to the transmission wheel 39 is 1:5 a reasonable speed ratio of the star gear. That is, the energy body rises by 10 mm, the transmission wheel 39 makes 5 turns, the generator uses 30 poles (200 rpm), the screw will rotate 6000/4 circles when rising 6 m, and the speed ratio of the transmission speed increaser is 10 times. Thus, the screw 35 rises to 6m to make the generator rotate 3 W for 2.5 hrs, matching the generator of the corresponding power, the power generation is power ^{∗} power generation time; other parameters can be set reasonably according to the unit.

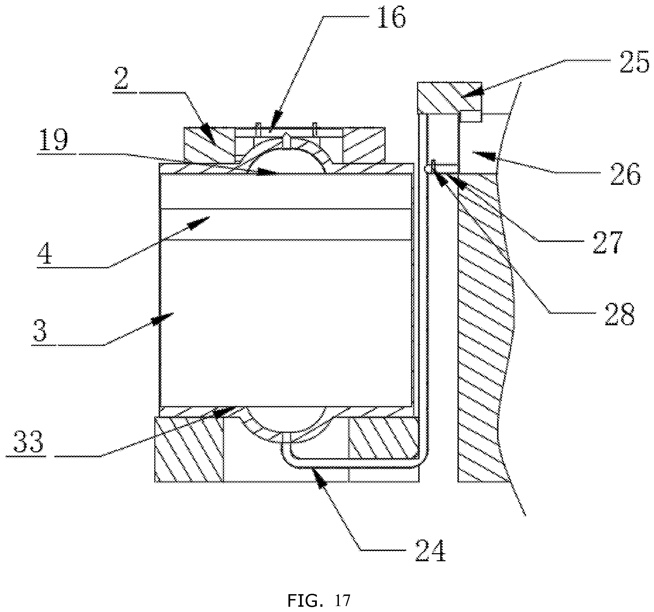

As shown in FIG. 17, a closed end cap 33 is arranged at one side of the main body 3 far away from the evaporator 2. An accommodation space containing an energy liquid is formed by an inner wall of the main body 3, the end cap 33, and the energy body 4. The end cap 33 is provided with a pipeline III 24. The pipeline III 24 has one end communicating with the accommodation space and the other end connected with a hydraulic turbine 25. A water tank 26 is arranged at a water outlet of the hydraulic turbine 25. The water tank 26 is connected to the pipeline III 24 or the accommodation space via a pipeline IV 27. The pipeline IV 27 is provided thereon with a valve. The water tank 26 is arranged higher than the accommodation space.

In this embodiment, electricity is generated by using the energy liquid and the hydraulic turbine 25, without requiring a variable speed system or requiring mechanical losses. Meanwhile, after the working stroke of the prime mover is completed, the energy liquid is stored in the water tank 26, which can store energy and provide energy for liquefaction formation. Specifically, in the working stroke, the energy body 4 moves, and pushes the energy liquid from the accommodation space to the water inlet of the hydraulic turbine 25 via the pipeline IV 27, and generates electricity, and finally flows into the water tank 26. During the liquefaction stroke, since the water tank 26 is higher than the accommodation space, and the height difference meets the pressure required for the liquefaction stroke, when the valve arranged on the pipeline IV 27 is opened, the energy liquid flows back to the accommodation space due to the gravity thereof and compresses the gaseous working medium to complete the liquefaction stroke, and the hydraulic turbine 25 was adopted to generate electricity. In case that the energy liquid has a pressure of 1.6 MPa, when subtracting a difference between the highest liquid level of the water bladder and the water outlet of the hydraulic turbine the water outlet of the hydraulic turbine is higher than the highest level of the water tank, a maximum liquid level difference between the bottom of the water tank and the highest level of the water bladder meets the pressure required by the liquefaction stroke), the value for the liquefaction stroke is set to 0.57 MPa (0.03MP is included in the height difference from the hydraulic turbine to the water tank), and the water head of the hydraulic turbine 25 is 100 m. Without considering the mechanical loss, the 3.67 T cooling liquid can generate 1 KWH, and the actual efficiency of the hydraulic turbine 25 can reach 80-85%, which greatly improves the economic benefits and ensures the feasibility of the prime mover.

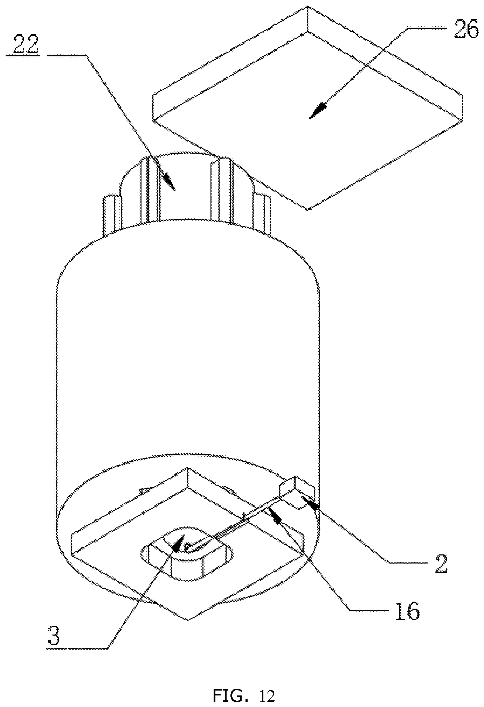

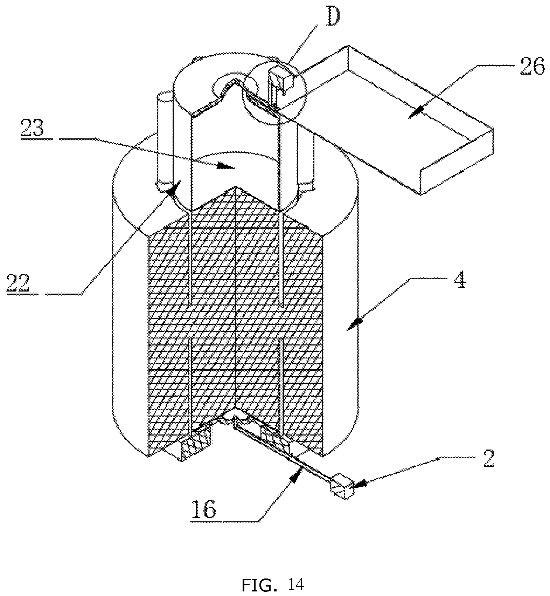

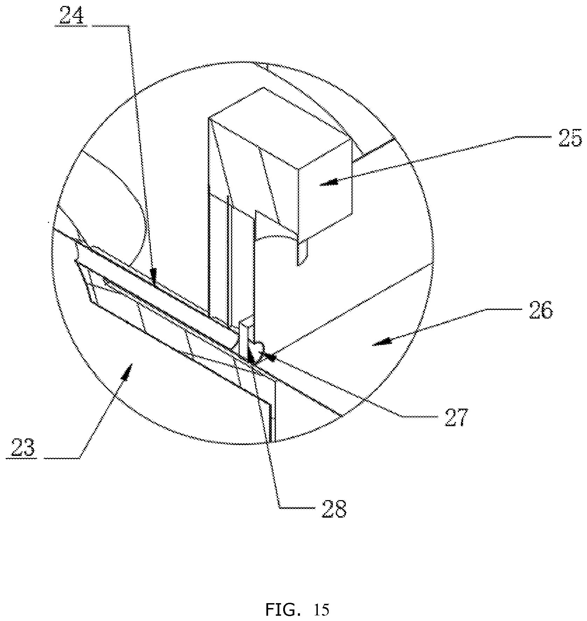

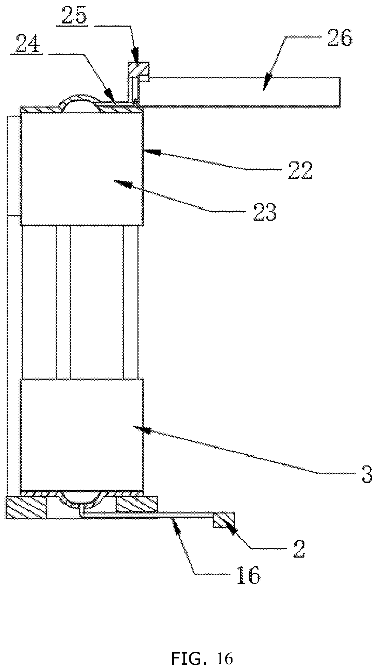

As shown in FIGS. 11-16, the prime mover further comprises: a hydraulic turbine unit arranged at one side of the energy body 4 facing away from the cavity 6. The hydraulic turbine unit comprises: a water bladder container 22 having an opening facing the energy body 4, and a water bladder 23 arranged inside the water bladder container 22. The water bladder 23 is connected with an end of pipeline III 24. The other end the pipeline III 24 is connected with a hydraulic turbine 25. A water tank 26 is arranged at a water outlet of the hydraulic turbine 25. The water tank 26 is connected to the pipeline III 24 or the water bladder 23 via a pipeline IV 27. The pipeline IV 27 is provided thereon with a valve. The water tank 26 is arranged higher than the accommodation space.

In this embodiment, electricity is also generated by using the energy liquid and the hydraulic turbine 25, without requiring a variable speed system or requiring mechanical losses. Specifically, during the working stroke, the cavity 6 or the liner 19 expands in volume, which pushes the energy body 4 to move upward, in turn the energy body 4 pushes the energy liquid flow from the water bladder 23 along the pipeline III 24 to the water inlet of the hydraulic turbine 25, and generate electricity, and finally flow into the water tank 26. During the liquefaction stroke, since the water tank 26 is higher than the water bladder 23, and the height difference therebetween meets the pressure required by the liquefaction stroke, when the valve arranged on the pipeline IV 27 is opened, the energy liquid flows back to the water bladder 23 due to gravity thereof, which compresses the gaseous working medium to complete the liquefaction stroke.

The valve arranged on the pipeline IV 27 is the solenoid valve IV 28, which makes the energy liquid in the water tank 26 flow back into the water bladder 23 during the liquefaction stroke.

The water bladder container 22 is in fixed connection with the main body 3. To ensure the integrity of the prime mover and simplify the installation difficulty, two ends of the energy body 4 are preferably arranged to have clearance fit with the main body 3 and the water bladder container 22, respectively, so as to reduce sliding friction and avoid unnecessary energy loss.

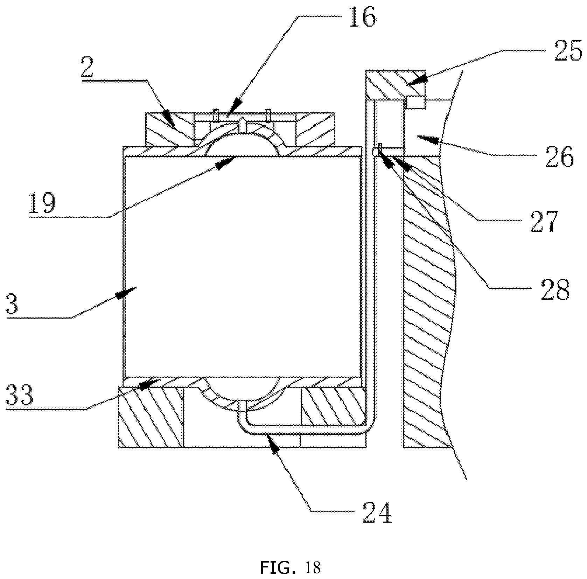

As shown in FIG. 18, a hydraulic turbine unit is provided. The hydraulic turbine unit comprises: an evaporator 2, a main body 3, and a retractable liner 19. The liner 19 is arranged within the main body 3 and communicates with the evaporator 2. The main body 3 contains an energy liquid therein. In this embodiment, the energy liquid works as the energy body 4. The main body 3 is connected with one end of a pipeline III 24, and the other end of the pipeline III 24 is connected with a hydraulic turbine 25. A water tank 26 is arranged at a water outlet of the hydraulic turbine 25. The water tank 26 is connected with the pipeline III 24 or the main body 3 via a pipeline IV 27. The pipeline IV 27 is provided thereon a valve; and the water tank 26 is arranged higher than the main body 3. The evaporator 2 is configured to continuously absorb heat and evaporate a liquid working medium to enter the liner 19, such that a volume expansion of the liner 19 pressurizes the energy liquid filled in the main body 3, and a pressurized energy liquid flows into the hydraulic turbine 25 to output a mechanical energy. The energy liquid is configured to flow back to the main body 3 due to a gravity thereof via the pipeline IV 27 or via the pipeline IV 27 and the pipeline III 24 and to compress a gaseous working medium for liquefaction, when an ambient temperature meets a liquefaction temperature. The valves and the solenoid valve IV 28 are easy to control. In this embodiment, the energy liquid is used as the energy body, and the sliding fit of the energy body 4 is not required, which avoids unnecessary energy loss and improves energy efficiency.

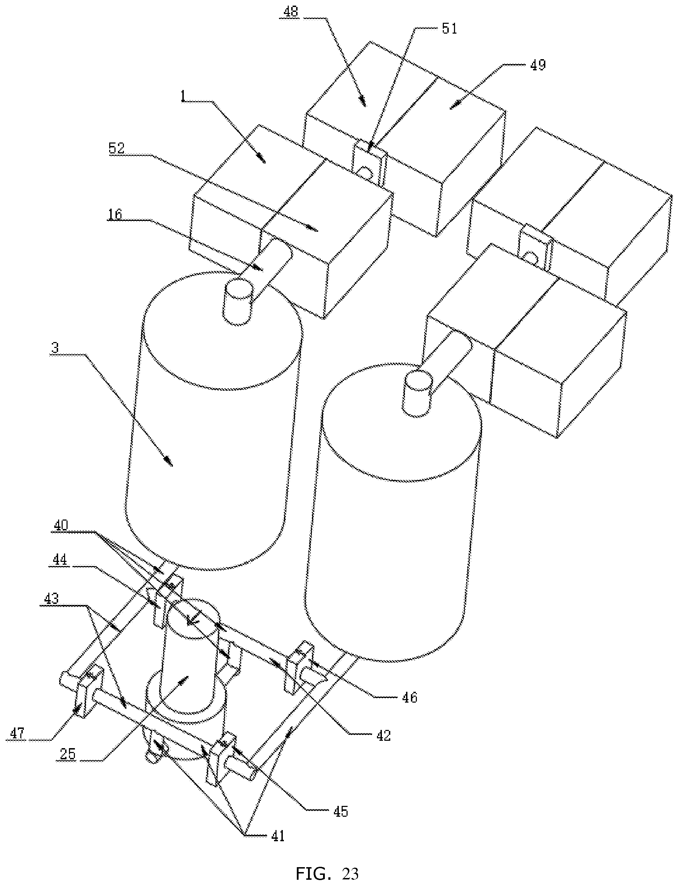

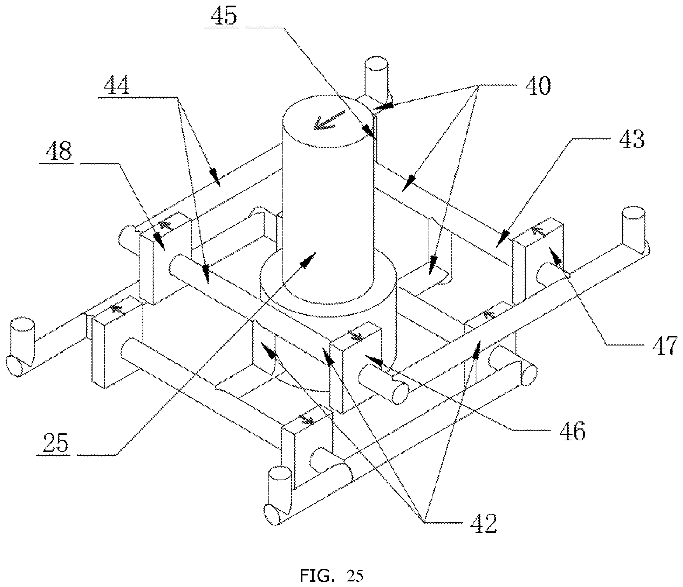

As shown in FIGS. 23-25, the present application further provides a hydraulic turbine unit. The hydraulic turbine unit comprises: a hydraulic turbine 25, two heat exchangers 52, and two main bodies 3. Each heat exchanger 52 communicates with a corresponding main body 3. One of the two main bodies 3 is accommodated with an energy liquid. Each of two main bodies 3 is connected with a water inlet and a water outlet of the hydraulic turbine 15 via two pipelines and the four pipelines are all provided valves thereon respectively. Each of the two heat exchangers 52 is connected with a cool source 48 and a heat source 49, and the cool source 48 and the heat source 49 are operably to control an on-off state thereof.

In a state that one of the two heat exchangers 52 communicates with a heat source 49 and the other one of the two heat exchangers 52 communicates with a cool source 48, a liquid working medium contained in the heat exchanger 52 communicating with the heat source 49 continuously absorbs heat and evaporates to enter the corresponding main body 3 where the gaseous working medium pressurizes the energy liquid filled in the main body 3. The pressurized energy liquid flows through the pipeline at the water inlet of the hydraulic turbine 25 connected with the corresponding main body 3, and enters the hydraulic turbine 25 for electricity generation, thereafter, flows out of the hydraulic turbine 25 through another pipeline connecting the other main body 3 and the water outlet of the hydraulic turbine 25 to enter the other main body 3, which therefore compresses the gaseous working medium in the main body 3 in connection with the cool source 48, and the other two the pipelines are closed at this time.

Both the heat exchangers 52 are connected with the cool source 48 and the heat source 49, the on-off state of which can be controlled, so that the energy liquid flows back and forth in the two main bodies 3 to make the hydraulic turbine 25 work continuously.

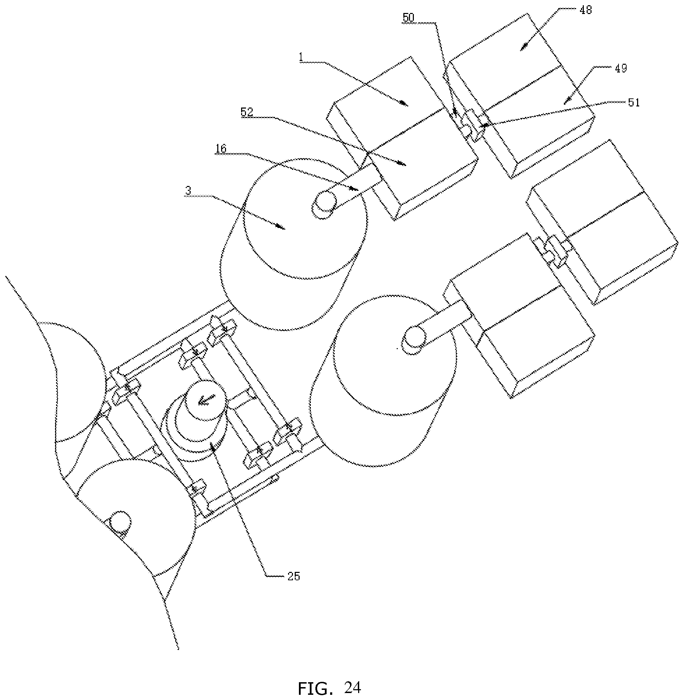

Specifically, as shown in FIG. 24, each heat exchanger 52 is respectively connected with the cool source 48 and the heat source 49 through two pipelines, one ends of the two pipelines are respectively connected with the heat source 49 and the cool source 48, and the other ends are connected to the heat exchanger 52. In addition, a valve f 51 and a valve e 50 are respectively provided on the two pipelines. When the heat exchanger 52 needs to be connected to the heat source 49, the valve f 51 is opened, and the valve e 50 is closed; and when the heat exchanger 52 needs to be switched and connected to the cool source 48, the valve f 51 is closed, and the valve e 50 is opened. The connection structure is simple, and the switching operation is convenient and quick.

As shown in FIG. 23, in this embodiment, the azimuths or positional relationships indicated by the terms "left side" and "right side" are based on the azimuth or positional relationships shown in the accompanying drawings, which are only for the convenience of describing the present application and simplifying the description, rather than indicating or implying that the indicated device or element must have a particular orientation, be constructed and operated in a particular orientation, and therefore should not be construed as limiting the application. The left main body 3 is connected to the water inlet of the hydraulic turbine 25 through the pipeline a 40, and a valve a 44 is arranged on the pipeline a 40; and the left main body 3 is connected to the water outlet of the hydraulic turbine 25 through the pipeline d 43, and a valve d 47 is arranged on the pipeline d 43. The right main body 3 is connected to the water inlet of the hydraulic turbine 25 through the pipeline c 42, and a valve c 46 is arranged on the pipeline c 42; and the right main body 3 is connected to the water outlet of the hydraulic turbine 25 through the pipeline b 41, and a valve b 45 is arranged on the pipeline b 41. When the left main body 3 does work, the valve d 47 and the valve c 46 are closed, and the left heat exchanger 52 communicates with the heat source 49. The liquid working medium is heated to expand and evaporate, as the volume expands and the pressure increases, the gaseous working medium with a high pressure makes the energy liquid (contacting the liquid surface) in the cylinder to have an equal pressure. When the water pressure reaches the set value, the valve a 44 and the valve b 45 are opened, and the pressurized energy liquid in the left main body 3 enters the hydraulic turbine 25 through the pipeline a 40, and the energy liquid drives the hydraulic turbine 25 to output electricity. The energy liquid thereafter flows from the water outlet of the hydraulic turbine 25 to the right main body 3 through the pipeline b 41, and the energy liquid entering the right main body 3 compresses the gaseous working medium in the right main body 3. In such condition, the right heat exchanger 52 is connected to the cool source 48 and discharges heat therefrom. In this way, a power generation is performed, and the valve a 44 and the valve b 45 are closed.

The control system monitors the working state in a timing or real-time manner. When the water level in the left main body 3 reaches the set value, the right heat exchanger 52 is controlled to connect the heat source 49 for preheating, and the left heat exchanger 52 is connected to the cool source 48. The right heat exchanger 52 is connected to the heat source 49, the right heat exchanger 52 absorbs heat, and therefore the liquid working medium is expanded and evaporated, and the pressure in the right heat exchanger 52 and the right main body 3 is maintained to reach the set value. When the energy liquid level in the left main body 3 reaches the lowest level, the valve d 47 and the valve c 46 are opened, the energy liquid enters the water inlet of the hydraulic turbine 25 through the pipeline c 42, and drives the hydraulic turbine 25 to rune and to output electricity. The energy liquid flows out of the water outlet of the hydraulic turbine 25 and enters the left main body 3 through the pipeline d 43, and compresses the gaseous working medium in the left main body 3. In such condition, the left heat exchanger 52 is connected to the cool source 48 and discharges heat to the cool source 48.

In this way, the hydraulic turbine can work continuously through the energy liquid in the main body 3, and when the conditions of the heat source and the cool source are satisfied, the hydraulic turbine can operate reciprocatedly and output the electricity. Thus, low-grade thermal energy (can be as low as 60°) can be effectively utilized to produce waste heat in life, and the water in the river, lake, sea, or air at low temperature in the natural environment can be used as the cool source. By directly transfer the high pressure generated by expansion of a working medium (refrigerant) in a fixed volume of the main body 3 to the energy liquid in the main body 3, the energy liquid obtains the high pressure and drives the hydraulic turbine 25 to operate to generate electricity, and a continuous cycle operation can be realized through multiple sets of units to ensure the output of the electricity. In addition, compared with the previous single set of the prime mover outputting through the rack and pinion, the ball screw or the water tank, and the like, the liquefaction stroke of each group of this embodiment is realized by the working stroke of another group, which at least double improves the power generation, and continuous cycle operation can be realized through the combination of multiple sets. Through the configuration of the pipeline and the valve, the two sets of the main body 3 can be used to generate electricity by a single hydraulic turbine 25, and the cost can be reduced at the same time.

As shown in FIG. 23, every two pipelines corresponding to a same main body 3 converge with each other at a side close to the same main body 3, and are independently connected with the main body 3 after the converging. That is, the pipeline a 40 and the pipeline d 43 converge at a side near the left main body 3 and communicate with the left main body 3 through a pipeline, and the pipeline b 41 and the pipeline c 42 converge at a side near the right main body 3 and communicate with the right main body 3 through a pipeline. In this embodiment, only one pipeline communicates with the main body 3, which reduces the sealing difficulty of the main body 3 and meanwhile increases the compressive strength of the main body 3.

Every two pipelines connected with the water inlet of the hydraulic turbine 25 converge with each other at a side close to the water inlet, and are independently connected with the water inlet of the hydraulic turbine 25 after the converging. Every two pipelines connected with the water outlet of the hydraulic turbine 25 converge with each other at a side close to the water outlet, and are independently connected with the water outlet of the hydraulic turbine 25 after the converging. That is, the pipeline a 40 and the pipeline c 42 communicate with each other and communicate with the water inlet of the hydraulic turbine 25 through one pipeline, the pipeline d 43 and the pipeline b 41 communicate with each other and communicate with the water outlet of the hydraulic turbine through one pipeline, which facilitates the connection with the hydraulic turbine 25, simplifies the installation difficulty, and reduces the cost.

As shown in FIGS. 24-25, the hydraulic turbine unit further comprises two sets of heat exchangers 52, main bodies 3, and retractable liners 19, and four pipelines. The two sets of the main bodies 3 are connected with the water inlet and the water outlet of the hydraulic turbine 25 by the same manner as described in the above, so that during the preheating process of one set, the other set starts to work, so as to achieve continuous cycle operation, and continuously output mechanical energy. As shown in FIG. 24, two sets of the pipeline a 40 and the pipeline d 43 are connected to the water inlet of the hydraulic turbine 25 through the same pipeline, and the two sets of the pipeline b 41 and the pipeline d 43 are connected to the water outlet of the hydraulic turbine 25 via the same pipeline, which simplifies the connection difficulty of the hydraulic turbine 25.

The hydraulic turbine unit of the present application further comprises a retractable liner 19 arranged inside each main body 3, wherein the liner 19 communicates with a corresponding heat exchanger 52. In this embodiment, the energy liquid is pushed to work by the liner 19, so that the gaseous working medium is isolated from the energy liquid, so that the volatilization of the energy liquid is prevented from being mixed with the refrigeration medium, and the service life is improved.

Furthermore, a water bladder is arranged in each main body 3, the energy liquid is arranged in the water bladder 23, and the water bladder 23 communicates with a pipeline. The configuration of the water bladder 23 can isolate the gaseous working medium from the energy liquid, preventing the volatilization of the energy liquid from being mixed with the refrigeration medium, and thereby improving the service life.

The hydraulic turbine unit of the present application further comprises an energy body 4 slidably arranged inside the main body 3. The energy liquid is contained at one side of the energy body 4 facing away from the heat exchanger 52. Based on the configuration of the energy body 4, the inner cavity of the main body 3 is divided by the energy body 4 into the cavity and the accommodation space, the liner 19 and the water bladder 23 can be configured in the cavity and the accommodation space, so as to improve the service life, and to facilitate the promotion of the energy liquid by the gaseous working medium.

A method of doing work comprises the following steps:
enabling the liquid working medium in the evaporator 2 to absorbs heat and evaporates to form the gaseous working medium to enter the liner 19, such that the liner 19 expands along the cavity 6 and pushes the energy body 4 to move upward and do work until reaching the upper limit stroke; and enabling the energy body 4 to move down and compresses the liner 19 due to a gravity thereof, when the ambient temperature meets the liquefaction temperature, so as to liquefy the gaseous working medium in the liner 19.

The method is specifically conducted as follows:
In step 1, in a state that the energy body 4 is at a bottom, and the temperature sensor 8 detects that the temperature in the evaporator 2 reaches a temperature for work, the controller 17 controls the solenoid valve I 7 to open, the liquid working medium in the liquid reservoir 1 is enabled to flow into the evaporator 2, and to form the gaseous working medium after evaporation. The gaseous working medium is introduced to the liner 19, so as to expand the liner 19 along the cavity 6 and to push the energy body 4 to move up and do work externally.
In step 2, once the energy body 4 moves to the upper limit stroke, an upper limit switch 12 is triggered. The controller 17 receives a signal from the upper limit switch 12, controls the solenoid valve I 7 to close, and controls the lock device 14 to lock a position of the energy body 4.
In step 3, when it is detected by the ambient temperature sensor 18 that an ambient temperature reaches a set value for liquefaction stroke, the controller 17 controls the radiator 5 to work, so as to enable a pressure of the gaseous working medium in the liner 19. When it is detected by the pressure sensor 9 that the pressure meets a set value, the controller 17 controls the lock device 14 to release from locking, and at the same time controls the solenoid valve I 7 to open, to enable the energy body 4 to move downward, such that the liner 19 is contracted along the cavity 6 by a downward pressure of the energy body, and the liquefied gaseous working medium flows back into the liquid reservoir 1.
In step 4, once the energy body 4 moves down to the lower limit stroke, a lower limit switch 13 is triggered. After receiving a signal from the lower limit switch 13, the controller 17 controls the solenoid valve I 7 to turn off, and the radiator 5 stops working.
In step 5, step 1 is repeated to reciprocate a working stroke and the liquefaction stroke.

An end cap 33, a ball screw, and a generator 38 are further included. During the work movement of the energy body 4, the energy body 4 pushes a screw 35 of the ball screw to move up, the screw 35 drives a nut assembly 34 of the ball screw to rotate, and the nut assembly 34 drives a transmission wheel 39 of the generator 38 to rotate to generate electricity.

An end cap 33, a hydraulic turbine 25, and a water tank 26 are further included. Between an inner wall of the main body 3, the end cap 33, and the energy body 4, an accommodation space containing the energy liquid is formed. During the work movement of the energy body 4, the energy body 4 pushes the energy liquid along the pipeline III 24 to enter the hydraulic turbine 25 to generate electricity, and the energy liquid flows from the water outlet of the hydraulic turbine 25 into the water tank 26. During the liquefaction stroke, the energy liquid flows back to the accommodation space through the valve and the pipeline IV 27, and pushes the energy body 4 to move, whereby compressing the gaseous working medium for the liquefaction.

A water bladder container 22, a water bladder 23, a hydraulic turbine 25, and a water tank 26 are further included. During the work movement of the energy body 4, the energy body 4 pushes the energy liquid in the water bladder 23 through the pipeline IV 27 to enter the hydraulic turbine 25 to generate electricity, and the energy liquid flows from the water outlet of the hydraulic turbine 25 into the water tank 26. During the liquefaction stroke, the energy liquid flows back to the water bladder 23 through the valve and the pipeline IV 27, and compresses the gaseous working medium for the liquefaction.

Specific working principle of the present application is as follows:
Working stroke: When the temperature of the heat source is high, such as through solar heat collection, cooling water and exhaust air from the condenser and engine during air conditioning, industrial cooling water or industrial waste flue gas and other high temperature environments, preferably higher than 60°, and when the heat dissipation temperature of the liquefaction stroke is relatively low, the working temperature can be reduced accordingly. The evaporator 2 absorbs external heat, the temperature sensor 8 detects that the temperature in the evaporator 2 reaches the set value for working stroke, and sends a signal to the controller 17. The controller 17 controls the solenoid valve I 7 to open, and controls the lock device 14 to unlock the energy body 4, so that the liquid working medium enters the evaporator 2 and is evaporated, together with the liquid working medium retained in the evaporator 2, into the gaseous working medium. The gaseous working medium enters the interior of the liner 19, a resulting volume expansion causes the liner 19 to expand along the cavity 6 and to push the energy body 4 to move upward and meanwhile do work, thus outputting the mechanical kinetic energy.

The liquid reservoir 1 continuously provides the liquid working medium to the evaporator 2, and the liquid working medium is continuously evaporated, so that the liner 19 continues to expand along the cavity 6 and push the energy body 4 to move upward until the energy body 4 reaches the upper limit stroke. In such case, the upper limit switch 12 is triggered, the upper limit switch 12 sends a signal to the controller 17, the controller 17 controls the solenoid valve 17 to close, the lock device 14 locks the energy body 4, and the working stroke ends.

During the working stroke, when the temperature of the heat source is lower than the set value for working stroke, the temperature of the heat source drops, the evaporator 2 stops absorbing heat, the energy body 4 stops moving upward and doing work externally, in such case, the controller 17 controls the lock device 14 to lock the energy body 4, and the working stroke ends in advance. After the external ambient temperature is lower than the set value for liquefaction stroke or the temperature of the heat source is higher than the set value for working stroke, the liquefaction stroke or the working stroke continues.

Liquefaction stroke: when the set value for liquefaction stroke is met under the ambient temperature, preferably below 30°, the ambient temperature sensor 18 detects that the set value for liquefaction stroke is met at the ambient temperature, and sends a signal to the controller 17. The controller 17 controls the solenoid valve 17 to open, the lock device 14 releases the locking of the energy body 4, the pressure of the gaseous working medium in the liner 19 decreases as the temperature decreases, the energy body 4 moves downward caused by the gravity itself, which makes the liner 19 to compress along the cavity 6, thereby compressing the gaseous working medium in the liner 19, and the volume of the gaseous working medium decreases, the gaseous working medium is liquefied, and flows back into the evaporator 2 and the liquid reservoir 1, thus completing the liquefaction stroke.

When the liquefaction stroke starts, the radiator 5 is turned on at the same time, and the high temperature generated by compressing the gaseous working medium in the liner 19 is conveyed to the radiator 5 through the heat exchange tube 501 and discharged to the outside. Meanwhile, the gravitational potential energy of the energy body 4 is greater than the energy required for the liquefaction of the gaseous working medium in the liner 19, the energy body 4 does work externally while the liquefaction stroke.

During the liquefaction stroke, when the ambient temperature sensor 18 detects that the ambient temperature is higher than the set value for liquefaction stroke, the energy body 4 stops moving downward, the ambient temperature sensor 18 sends a signal to the controller 17, and the controller 17 controls the solenoid valve 17 to close, the lock device 14 locks the energy body 4, the liquefaction stroke ends in advance. When the ambient temperature is lower than the set value for liquefaction stroke or the heat source temperature is higher than the set value for working stroke, the liquefaction stroke or the working stroke continues.

The weight of the energy body 4 of the present application can be adjusted according to the ambient temperature and the temperature of the heat source. The energy body 4 can output mechanical energy to the outside, and the mechanical energy is introduced to the generator through a speed increaser and converted into electrical energy.

## Claims

1. A prime mover, comprising: an evaporator (2), a main body (3), and an energy body (4);
wherein
the energy body (4) is slidably arranged in the main body (3);
between a bottom of the energy body (4) and an inner wall of the main body (3), a closed cavity (6) is formed or a retractable the liner (19) is provided; and the evaporator (2) communicates with the cavity (6) or the liner (19);
the evaporator (2) is configured to continuously absorb heat and evaporate a liquid working medium to push the energy body (4) to move up and do work until reaching an upper limit stroke; and
the energy body is configured to move downward due to a gravity thereof to compress a gaseous working medium for liquefaction, when an ambient temperature meets a liquefaction temperature.

2. The prime mover according to claim 1, further comprising a radiator (5), wherein the radiator (5) is configured to discharge a heat quantity generated by a liquefaction stroke.

3. The prime mover according to claim 2, further comprising: a controller (17), as well as an upper limit switch (12) and a lower limit switch (13) that are arranged at the energy body (4); wherein
the controller (17) is in electrical connection with the upper limit switch (12), the lower limit switch (13), the evaporator (2), and the radiator (5).

4. The prime mover according to claim 3, further comprising: a lock device (14), configured to lock the energy body (4); wherein the controller (17) is in electrical connection with the lock device (14).

5. The prime mover according to claim 4, wherein a temperature sensor (8) is arranged within the evaporator (2); the temperature sensor (8) is configured to detect whether a temperature in the evaporator (2) reaches a preset temperature for work; and the controller (17) is in electrical connection with the temperature sensor (8).

6. The prime mover according to claim 4, further comprising: an ambient temperature sensor (18) and/or a pressure sensor (9); wherein
the pressure sensor (9) is configured to monitor a pressure value within the cavity (6); and
the ambient temperature sensor (18) and/or the pressure sensor (9) is in electrical connection with the controller (17).

7. The prime mover according to claim 5 or 6, wherein the evaporator (2) communicates with the liquid reservoir (1) via a pipeline I (15); a solenoid valve I (7) is provided at the pipeline I (15); and the controller (17) is in electrical connection with the solenoid valve I (7).

8. The prime mover according to claim 7, wherein an upper liquid level sensor (10) and a lower liquid level sensor (11) are arranged within the liquid reservoir (1); the controller (17) is in electrical connection with the upper liquid level sensor (10) and the lower liquid level sensor (11).

9. The prime mover according to claim 1, wherein the main body (3) or the energy body (4) is provided thereon with the rolling bodies; and an outer wall of the energy body (4) and an inner wall of the main body (3) are connected via the rolling bodies.

10. The prime mover according to any one of claims 1-6 and 8-9, further comprising at least one set of ball screw; wherein
a top of the main body (3) is provided with an end cap (33);
a nut assembly (34) of the at least one set of the ball screw is rotatably arranged at the end cap (33); and
a screw (35) of the at least one set of the ball screw has one end fixed at the energy body (4) and the other end passing through the end cap (33).

11. The prime mover according to claim 10, wherein
the end cap (33) is further provided thereon with a generator (38);
the generator (38) is provided with a transmission wheel (39) matching with the nut assembly (34); and
the transmission wheel (34), under the driving of the nut assembly (34), drives the generator (38) to generator electricity.

12. The prime mover according to claim 11, wherein three sets of ball screws are arranged in a circle; and the transmission wheel (39) of the generator (38) simultaneously meshes with three sets of nut assemblies (34).

13. The prime mover according to claim 11 or 12, further comprising one or a plurality of guiding support columns (37) arranged in parallel with the screw (35); wherein
the plurality of guiding support columns (37) are arranged in a circle; and each of the plurality of guiding support columns (37) has one end in fixed connected with the energy body (4) and the other end passing through the end cap (33).

14. The prime mover according to claim 13, wherein the other ends of the plurality of guiding support columns (37) passing through the end cap (33) are in fixed connection with a fixed plate (36).

15. The prime mover according to any one of claims 1-6 and 8-9, wherein
a closed end cap (33) is arranged at one side of the main body (3) far away from the evaporator (2);
an accommodation space containing an energy liquid is formed by an inner wall of the main body (3), the end cap (33), and the energy body (4);
the end cap (33) is provided with a pipeline III (24); the pipeline III (24) has one end communicating with the accommodation space and the other end connected with a hydraulic turbine (25);
a water tank (26) is arranged at a water outlet of the hydraulic turbine (25);
the water tank (26) is connected to the pipeline III (24) or the accommodation space via a pipeline IV (27); the pipeline IV (27) is provided thereon with a valve; and
the water tank (26) is arranged higher than the accommodation space.

16. The prime mover according to any one of claims 1-6 and 8-9, further comprising a hydraulic turbine unit arranged at one side of the energy body (4) facing away from the cavity (6); the hydraulic turbine unit comprising: a water bladder container (22) having an opening facing the energy body (4), and a water bladder (23) arranged inside the water bladder container (22);
wherein
the water bladder (23) is connected with an end of pipeline III (24); the other end the pipeline III (24) is connected with a hydraulic turbine (25);
a water tank (26) is arranged at a water outlet of the hydraulic turbine (25);
the water tank (26) is connected to the pipeline III (24) or the water bladder (23) via a pipeline IV (27); the pipeline IV (27) is provided thereon with a valve; and
the water tank (26) is arranged higher than the accommodation space.

17. The prime mover according to claim 16, wherein the water bladder container (22) is in fixed connection with the main body (3).

18. A hydraulic turbine unit, comprising: an evaporator (2), a main body (3), and a retractable liner (19);
wherein
the liner (19) is arranged within the main body (3) and communicates with the evaporator (2); the main body (3) contains an energy liquid therein;
the main body (3) is connected with one end of a pipeline III (24), and the other end of the pipeline III (24) is connected with a hydraulic turbine (25);
a water tank (26) is arranged at a water outlet of the hydraulic turbine (25);
the water tank (26) is connected with the pipeline III (24) via a pipeline IV (27); the pipeline IV (27) is provided thereon a valve; and the water tank (26) is arranged higher than the main body (3);
the evaporator (2) is configured to continuously absorb heat and evaporate a liquid working medium to enter the liner (19), such that a volume expansion of the liner (19) pressurizes the energy liquid filled in the main body (3), and a pressurized energy liquid flows into the hydraulic turbine (25) to output a mechanical energy; and
the energy liquid is configured to flow back to the main body (3) due to a gravity thereof via the pipeline IV (27) or via the pipeline IV (27) and the pipeline III (24) and to compress a gaseous working medium for liquefaction, when an ambient temperature meets a liquefaction temperature.

19. A hydraulic turbine unit, comprising: a hydraulic turbine (25), two heat exchangers (52), and two main bodies (3); wherein
each heat exchanger (52) communicates with a corresponding main body (3); one of the two main bodies (3) is accommodated with an energy liquid; each of two main bodies (3) is connected with a water inlet and a water outlet of the hydraulic turbine (15) via two pipelines and the four pipelines are all provided valves thereon respectively; each of the two heat exchangers (52) is connected with a cool source (48) and a heat source (49), and the cool source (48) and the heat source (49) are operably to control an on-off state thereof;
in a state that one of the two heat exchangers (52) communicates with a heat source (49) and the other one of the two heat exchangers (52) communicates with a cool source (48), a liquid working medium contained in the heat exchanger (52) communicating with the heat source (49) continuously absorbs heat and evaporates to enter the corresponding main body (3) where the gaseous working medium pressurizes the energy liquid filled in the main body (3), the pressurized energy liquid flows to the hydraulic turbine (25) through a pipeline and a control valve, and a resulting energy liquid flows out of the water outlet of the hydraulic turbine through a pipeline and a control valve and enters the other main body (3) in connection with the cool source (48) where the gaseous working medium is pressurized, and the other two pipelines are closed; and
by controlling the on-off state of the heat source (49) and the cool source (48), the energy liquid flows back and forth in the two main bodies (3), so that the hydraulic turbine (25) is operated to output mechanical energy.

20. The hydraulic turbine unit of claim 19, wherein every two pipelines corresponding to a same main body (3) converge with each other at a side close to the same main body (3), and are independently connected with the main body (3) after the converging.

21. The hydraulic turbine unit of claim 19, wherein
every two pipelines connected with the water inlet of the hydraulic turbine (25) converge with each other at a side close to the water inlet, and are independently connected with the water inlet of the hydraulic turbine (25) after the converging; and
every two pipelines connected with the water outlet of the hydraulic turbine (25) converge with each other at a side close to the water outlet, and are independently connected with the water outlet of the hydraulic turbine (25) after the converging.

22. The hydraulic turbine unit of claim 19, further comprising two sets of heat exchangers (52), main bodies (3), and retractable liners (19), and four pipelines; wherein
the gaseous working medium in the main body is pre-cooled before compression, and the liquid working medium is pre-heated before evaporation; and
the two sets alternately supply the pressurized energy liquid to the hydraulic turbine (25), so that the hydraulic turbine (25) operates continuously.

23. The hydraulic turbine unit of any one of claims 19-22, further comprising a retractable liner (19) arranged inside each main body (3), wherein the liner (19) communicates with a corresponding heat exchanger (52).

24. The hydraulic turbine unit of any one of claims 19-22, wherein a water bladder is arranged in each main body (3), the energy liquid is arranged in the water bladder (23), and the water bladder (23) communicates with a pipeline.

25. The hydraulic turbine unit of any one of claims 19-22, further comprising an energy body (4) slidably arranged inside the main body (3), wherein the energy liquid is contained at one side of the energy body (4) facing away from the heat exchanger (52).

26. A method of doing work, being applied to the prime mover of claim 1, the method comprising the following steps:
enabling the liquid working medium in the evaporator (2) to absorbs heat and evaporates to form the gaseous working medium to enter the liner (19), such that the liner (19) expands along the cavity (6) and pushes the energy body (4) to move upward and do work until reaching the upper limit stroke; and
enabling the energy body (4) to move down and compresses the liner (19) due to a gravity thereof, when the ambient temperature meets the liquefaction temperature, so as to liquefy the gaseous working medium in the liner (19).

27. The method of doing work of claim 26, comprising the following steps:
step 1: in a state that the energy body (4) is at a bottom, and the temperature sensor (8) detects that the temperature in the evaporator (2) reaches a temperature for work, controlling, by the controller (17), the solenoid valve I (7) to open, enabling the liquid working medium in the liquid reservoir (1) to flow into the evaporator (2), and to form the gaseous working medium after evaporation, introducing the gaseous working medium to the liner (19), so as to expand the liner (19) along the cavity (6) and to push the energy body (4) to move up and do work externally;
step 2: triggering an upper limit switch (12) once the energy body (4) moves to the upper limit stroke; receiving a signal from the upper limit switch (12) by the controller (17), controlling the solenoid valve I (7) to close, and controlling the lock device (14) to lock a position of the energy body (4);
step 3: controlling, by the controller (17), the radiator (5) to work, when it is detected by the ambient temperature sensor (18) that an ambient temperature reaches a set value for liquefaction stroke, and enabling a pressure of the gaseous working medium in the liner (19) to drop; and controlling, by the controller (17), the lock device (14) to release from locking, when it is detected by the pressure sensor (9) that the pressure meets a set value, and at the same time controlling the solenoid valve I (7) to open, to enable the energy body (4) to move downward, such that the liner (19) is contracted along the cavity (6) by a downward pressure of the energy body, and the liquefied gaseous working medium flows back into the liquid reservoir (1);
step 4: triggering a lower limit switch (13) once the energy body (4) moves down to the lower limit stroke, receiving, by the controller (17), a signal from the lower limit switch (13), controlling the solenoid valve I (7) to turn off, and enabling the radiator (5) to stop working; and
step 5: repeating step 1 to reciprocate a working stroke and the liquefaction stroke.

28. The method of doing work of claim 26 or 27, further comprising: an end cap (33), a ball screw, and a generator (38);
wherein
during the work movement of the energy body (4), the energy body (4) pushes a screw (35) of the ball screw to move up, the screw (35) drives a nut assembly (34) of the ball screw to rotate, and the nut assembly (34) drives a transmission wheel (39) of the generator (38) to rotate to generate electricity.

29. The method of doing work according to claim 26 or 27, further comprising: an end cap (33), a hydraulic turbine (25), and a water tank (26); wherein
between an inner wall of the main body (3), the end cap (33), and the energy body (4), an accommodation space containing the energy liquid is formed;
during the work movement of the energy body (4), the energy body (4) pushes the energy liquid along the pipeline III (24) to enter the hydraulic turbine (25) to generate electricity, and the energy liquid flows from the water outlet of the hydraulic turbine (25) into the water tank (26); and
during the liquefaction stroke, the energy liquid flows back to the accommodation space through the valve and the pipeline IV (27), and pushes the energy body (4) to move, whereby compressing the gaseous working medium for the liquefaction.

30. The method of doing work according to claim 26 or 27, further comprising: a water bladder container (22), a water bladder (23), a hydraulic turbine (25), and a water tank (26); wherein
during the work movement of the energy body (4), the energy body (4) pushes the energy liquid in the water bladder (23) through the pipeline IV (27) to enter the hydraulic turbine (25) to generate electricity, and the energy liquid flows from the water outlet of the hydraulic turbine (25) into the water tank (26); and
during the liquefaction stroke, the energy liquid flows back to the water bladder (23) through the valve and the pipeline IV (27), and compresses the gaseous working medium for the liquefaction.
